Europäisches Patentamt

European Patent Office

Office européen des brevets

(19)

(11) **EP 1 304 270 B1**

(12) **FASCICULE DE BREVET EUROPEEN**

(45) Date de publication et mention
de la délivrance du brevet:
**26.01.2005 Bulletin 2005/04**

(51) Int Cl.⁷: **B60T 8/00**

(21) Numéro de dépôt: **02022082.8**

(22) Date de dépôt: **02.10.2002**

(54) **Actions sur la trajectoire d'un véhicule à partir de la mesure des efforts transversaux, en tenant compte de son inertie**

Fahrzeugsstabilitätsregelungsverfahren unter Verwendung von Reifenseitenkräften, unter Berücksichtigung der Trägheit des Fahrzeugs

Vehicle stability control method using tyre lateral forces and taking into account inertia of the vehicle

(84) Etats contractants désignés:
**AT BE BG CH CY CZ DE DK EE ES FI FR GB GR IE IT LI LU MC NL PT SE SK TR**

(30) Priorité: **17.10.2001 FR 0113543**

(43) Date de publication de la demande:
**23.04.2003 Bulletin 2003/17**

(73) Titulaires:
• **Société de Technologie MICHELIN**
**63000 Clermont-Ferrand (FR)**
• **MICHELIN Recherche et Technique S.A.**
**1763 Granges-Paccot (CH)**

(72) Inventeur: **Pallot, Patrick**
**63000 Clermont-Ferrand (FR)**

(74) Mandataire: **Bauvir, Jacques et al**
**c/o Services SGD/LG/PI,**
**F 35,**
**Ladoux**
**63040 Clermont-Ferrand Cedex 9 (FR)**

(56) Documents cités:
**DE-A- 3 935 588**            **DE-A- 19 623 595**
**US-A- 5 852 787**            **US-A- 6 021 367**
**US-A- 6 106 081**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention se rapporte aux systèmes de contrôle de stabilité d'un véhicule, popularisés notamment sous la désignation « ESP ».

Dans les systèmes de sécurité pour l'automobile, il faut être capable d'estimer en temps réel le comportement du véhicule. C'est la base des systèmes de contrôle de stabilité appelés ESP. Ces systèmes reposent pour le moment, entre autres choses, sur l'observation des déplacements du véhicule par l'installation de capteurs pour la mesure de l'accélération transversale du véhicule et pour la mesure de la vitesse de lacet du véhicule.

En roulage dans de bonnes conditions de sécurité, c'est à dire tant que la stabilité du véhicule n'est pas compromise, le véhicule obéit aux commandes du conducteur. Lorsque le conducteur, essentiellement par ses actions sur le volant, amène le véhicule au delà des conditions de stabilité, va apparaître un survirage ou un sous virage du véhicule. Le véhicule vire, c'est à dire effectue un mouvement de lacet, plus que souhaité par le conducteur (survirage), ou moins que souhaité par le conducteur (sous virage).

A partir d'un modèle mathématique du pneu et d'un modèle mathématique du véhicule, et sur la base de mesures délivrées par des capteurs observant les actions du conducteur du véhicule (angle au volant, sollicitation des freins, de l'accélérateur) de capteurs de vitesse des roues, et à partir des mesures d'accélération transversale et de vitesse de lacet, un système ESP calcule en permanence les efforts au centre des roues, et estime le potentiel d'adhérence de la route en fonction de l'accélération transversale. En outre, le système ESP évalue le comportement du véhicule, le compare au comportement souhaité par le conducteur, et corrige s'il détermine que le véhicule ne s'inscrit pas dans une trajectoire stable.

Or l'utilisation des modèles pneu peut introduire un certain nombre d'approximations dans le modèle. En outre, le fait de baser un système de contrôle sur les déplacements du véhicule induit nécessairement un déclenchement a posteriori, donc ne pouvant réagir qu'après un retard fonction de l'inertie du véhicule. On entend par là qu'un système ESP, parce que parmi ses variables d'état figurent des mesures d'accélération transversale et de vitesse de lacet du véhicule, doit d'abord mesurer ce qu'est le déplacement du véhicule avant de conclure que le déplacement est dans le domaine de stabilité ou non, et agir ensuite sur les actionneurs du véhicule en conséquence. Par ailleurs, le système ESP actuel n'observe que les mouvements de la caisse du véhicule sans connaître exactement les raisons exactes de la perte de contrôle. Les mouvements de caisse résultent des contacts entre le pneumatique et le sol.

Le système ne détectera un déplacement du véhicule en discordance avec la commande imposée par le conducteur que d'autant plus tardivement que l'inertie du véhicule est grande, et la correction sera d'autant plus difficile que l'inertie est grande. Les actionneurs sont à l'heure actuelle essentiellement les freins du véhicule, commandés dans ce cas roue par roue et en dehors de l'action volontaire du conducteur, et l'effort moteur, que l'on peut diminuer automatiquement en agissant sur la gestion du moteur thermique.

Par ailleurs, la détection des mouvements de lacet nécessite l'utilisation de capteurs coûteux. Et les systèmes actuels sont dans l'obligation de faire une estimation de l'adhérence des roues sur la chaussée pour choisir les paramètres de déclenchement. Cette estimation est plus ou moins éloignée de la réalité.

L'invention a pour objectif de s'affranchir des inconvénients évoqués ci-dessus, et plus particulièrement de s'affranchir totalement de l'inertie d'un véhicule, pour pouvoir agir sur les actionneurs appropriés de façon à maintenir le véhicule dans une trajectoire stable, conforme aux ordres du conducteur en pilotant les actionneurs de manière à ce que les efforts réels au centre de chaque roue correspondent aux efforts souhaités.

L'invention propose un système de contrôle de la stabilité d'un véhicule et une méthode de contrôle de la stabilité d'un véhicule qui présentent l'avantage de pouvoir fonctionner même sans mesure de l'angle de lacet du véhicule.

L'invention concerne un véhicule comportant une caisse et au moins une liaison au sol avant et une liaison au sol arrière, chaque liaison au sol comprenant chacune une roue, chaque roue comportant un bandage pneumatique ou non pneumatique en contact avec le sol, le véhicule ayant un temps caractéristique fonction de son inertie correspondant au déphasage temporel dans l'apparition des poussées aux roues à l'avant et à l'arrière, à partir d'une commande du conducteur du véhicule, le véhicule étant pourvu d'actionneurs pour agir sur les forces transmises au sol par chacune des roues.

Sur un véhicule, le braquage des roues entraîne une poussée à l'avant, un mouvement de caisse puis une poussée à l'arrière. La poussée de ou de la ou des roues arrières intervient donc avec un léger retard par rapport à la commande au volant. Pour une meilleure détermination des actions de corrections de trajectoire, l'invention propose de tenir compte de ce retard T comme expliqué dans la suite.

Sous un premier aspect de l'invention, la méthode comprend les étapes suivantes :

(a) relever en temps réel la valeur réelle d'une variable choisie dans le groupe constitué par la poussée transversale « Y » et la charge verticale « Z », toutes deux agissant au centre de chacune des roues avant et arrière ;

(b) calculer en temps réel la valeur souhaitée d'au moins un paramètre de référence qui peut être corrélé auxdites valeurs réelles d'une variable choisie, résultant d'une action du conducteur sur les actionneurs, en tenant compte du temps caractéristique ;

(c) comparer la valeur souhaitée à la valeur réelle pour déterminer si la valeur réelle est compatible avec la valeur souhaitée ; et

(d) si la comparaison de l'étape (c) indique que la valeur réelle n'est pas compatible avec la valeur souhaitée, agir sur les actionneurs pour ramener la valeur réelle substantiellement compatible avec la valeur souhaitée.

On décrit ci-dessous un aspect préférentiel concernant l'application particulière de l'invention aux véhicules dont chaque essieu comporte au moins deux liaisons au sol comprenant chacune une roue, lesdites liaisons au sol étant montées de part et d'autre du plan médian de symétrie du véhicule. C'est l'architecture classique d'un véhicule de tourisme à quatre roues. Cependant, l'invention est applicable aussi aux véhicules à deux roues alignées, comme les motos, étant entendu que l'inertie est dans ce cas considérablement plus faible. Chaque liaison au sol comporte une roue, ayant en général un pneu ou, et ceci est équivalent dans le contexte de la présente invention, un bandage non pneumatique en contact avec le sol. Le véhicule est pourvu d'actionneurs pour agir sur les forces transmises au sol par chacune des roues, tels que freins, braquage des roues, éventuellement sélectivement roue par roue, répartition des charges portées par chacune des roues.

Les commandes du conducteur du véhicule visent à maintenir le véhicule sur une trajectoire en ligne droite, quelles que soient les perturbations du milieu environnant (par exemple rafales de vent transversales, changement d'adhérence sur tout ou partie du véhicule), ou visent à imposer au véhicule un déplacement transversal (changement de file pour dépasser sur autoroute) ou un braquage. Quels que soient les organes du véhicule sur les quels agit le conducteur (volant conventionnel, manette comme illustré par exemple dans la demande de brevet EP 0 832 807), cela revient en fait à vouloir imposer certaines poussées transversales, certaines variations de ces poussées.

L'invention propose donc de relever en temps réel les poussées effectives, de les comparer ordres du conducteur traduits en poussées ou variations de poussées transversales, et à commander en conséquence des actionneurs appropriés disponibles sur le véhicule. Dans un premier mode de réalisation, ladite variable est la poussée transversale « Y », et ladite valeur souhaitée d'au moins un paramètre de référence de l'étape (b) est la poussée transversale souhaitée « $Y_{souhaitée}$ », au centre de chaque roue. Plus particulièrement, l'étape (c) comporte obtenir un signal d'erreur représentatif de l'écart en amplitude et en signe entre la poussée transversale réelle « Y », et la poussée transversale souhaitée « $Y_{souhaitée}$ » et piloter les actionneurs pour minimiser le signal d'erreur.

Dans un autre mode particulier de réalisation, ladite variable est la poussée transversale « Y », les actionneurs comportent une commande de direction, et l'étape (a) comprend calculer en temps réel le couple réel de lacet correspondant aux valeurs réelles de poussée transversale « Y », et la valeur souhaitée d'au moins un paramètre de référence de l'étape (b) étant le couple de lacet « $M_{souhaité}$ » souhaité, l'étape (a) comprenant mesurer en temps réel un signal à la commande de direction et calculer le couple de lacet « $M_{souhaité}$ » souhaité, et l'étape (c) comprend utiliser ledit couple de lacet « $M_{souhaité}$ » souhaité pour le comparer au couple réel de lacet de l'étape (a). Plus particulièrement, l'étape (c) comporte obtenir un signal d'erreur représentatif de l'écart en amplitude et en signe entre le couple de lacet « $M_{souhaité}$ » souhaité et le couple réel de lacet et l'étape (d) comprend piloter les actionneurs pour minimiser le signal d'erreur.

Ainsi, si la poussée de l'essieu avant sature, le véhicule sous vire parce que les efforts de poussée du train avant sont inférieurs aux efforts souhaités par le conducteur (efforts souhaités tels que déterminés par la traduction des actions du conducteur sur son volant ou sur d'autres commandes à sa disposition). Une action automatique, par exemple du genre de celle déjà connue en soi dans les systèmes ESP usuels (on présentera d'autres actions ci-dessous) permet d'obtenir une résultante d'efforts sur le châssis conforme aux souhaits du conducteur et permet donc d'éviter le sous virage.

Si au contraire c'est la poussée de l'essieu arrière qui sature la première, le véhicule sur vire parce que les efforts de poussée du train arrière sont inférieurs aux efforts souhaités par le conducteur. Ladite action automatique permet d'obtenir une résultante d'efforts sur le châssis conforme aux souhaits du conducteur et permet donc d'éviter le sur virage.

Ce qui a été exposé ci-dessus se rapporte à ce que l'on appelle communément le régime stationnaire (ou le régime établi). En considérant un régime transitoire typique d'une manoeuvre d'urgence (évitement, changement de file), la vitesse de sollicitation du volant peut être considérée comme équivalente à un couple de lacet souhaité sur le véhicule. Si le couple réel est inférieur au couple souhaité, le véhicule ne tourne pas assez. Si ce couple réel est supérieur au couple souhaité, le véhicule tourne trop .

Selon un autre mode particulier de réalisation encore, laquelle ladite variable est la charge verticale « Z ». Plus particulièrement, les actionneurs comportent une commande de direction, et la valeur souhaitée d'au moins un paramètre de référence de l'étape (b) étant la charge « $Z_{souhaitée}$ » au centre de chaque roue, la méthode comprenant mesurer en temps réel un signal à la commande de direction et calculer les charges « $Z_{souhaitées}$ ». Plus particulièrement, l'étape (c) comporte obtenir un signal d'erreur représentatif de l'écart en amplitude et en signe entre la charge verticale réelle « Z » et la charge « $Z_{souhaitée}$ » ; et l'étape (d) comprend piloter les actionneurs pour minimiser le signal d'erreur.

La méthode selon l'invention permet, si les poussées d'un des essieux ne correspondent pas aux poussées transversales souhaitées, ou si le couple de lacet effectif est supérieur au couple de lacet souhaité ou si les charges verticales ne correspondent pas aux charges verticales souhaitées d'envoyer un signal d'action sur les actionneurs pour à minimiser le signal d'erreur, sans qu'il soit nécessaire, pour établir un tel signal, sans qu'il ait été nécessaire de mesurer la vitesse de lacet du véhicule. Bien entendu, une telle méthode reste compatible avec la mesure de la vitesse de lacet, notamment si l'on veut ajouter des éléments de redondance dans les calculs.

On a vu que l'invention propose une méthode de régulation d'un système de contrôle de stabilité du véhicule basée sur les efforts existant au centre de chaque roue d'un véhicule. En effet, les actions du conducteur, que ce soit en braquage, accélération ou freinage, vont se traduire par des efforts (variations d'efforts) transmis par les pneus au sol. Selon que ces variations d'efforts sont cohérentes par rapport aux ordres du conducteur, ou ne le sont pas, on peut conclure que le véhicule est stable, ou ne l'est plus. En partant des efforts au sol, on se trouve à la source des déplacements à venir. De la sorte, il est possible de corriger la trajectoire du véhicule bien plus tôt et un système ESP ou plus généralement de contrôle de stabilité gagne en finesse de correction. La sécurité y gagne et le confort de l'automobiliste et de ses passagers est renforcé.

L'estimation de critères de stabilité en temps réel, sur la base d'efforts au sol, permet d'améliorer le contrôle de stabilité de la trajectoire d'un véhicule, la mesure directe de l'effort permettant, par exemple, d'observer finement la saturation du pneumatique sur chacune des roues quelle que soit l'adhérence, en détectant la survenance de la non linéarité entre la poussée transversale développée et l'angle de dérive du pneu considéré mais aussi la non-linéarité de la poussée transversale développée et la charge appliquée sur le pneu.

Ce qui cause la perte de stabilité du véhicule est principalement le fait que les pneumatiques ne sont plus en mesure de corriger la trajectoire, vu le mouvement du véhicule. Quelle que soit la poussée développée par les pneus, celle-ci ne pourra jamais contrer les forces d'inertie. Cela peut être dû à une faible adhérence (route mouillée, verglas, neige, sable, feuilles mortes), au fait que le pneu est utilisé par le conducteur dans des conditions non prévues (pneu à plat ou sous gonflé), ou au fait que le véhicule s'est immédiatement mis dans des conditions de dérive trop importante, qui dépassent les limites physiques d'un ou de plusieurs des pneumatiques. On peut dire que l'un des ou plusieurs des pneumatiques saturent.

On peut instrumenter les paliers de suspension comme proposé dans la demande de brevet JP60/205037, ce qui permet de connaître facilement les efforts longitudinaux et transversaux développés par le pneumatique par des mesures dans les paliers de suspension. En variante, le pneumatique lui-même est équipé de capteurs d'efforts du pneu au sol. On peut par exemple procéder à une mesure comme expliqué par le brevet DE 39 37 966 ou comme enseigné par le brevet US 5,864,056 ou par le brevet US 5,502,433.

Sur la base des efforts mesurés par l'une ou l'autre des méthodes ci-dessus, et à partir d'équations d'équilibre d'une liaison au sol, on peut donc facilement calculer les efforts au centre de chaque roue. On dispose ainsi en temps réel des 3 efforts X, Y et Z, ce qui permet notamment de procéder aux traitements du signal en Y ou en Z pour les besoins expliqués dans le présent mémoire.

L'invention s'étend également à un système de contrôle de la stabilité d'un véhicule, ledit véhicule comportant une caisse et au moins une liaison au sol avant et une liaison au sol arrière, chaque liaison au sol comprenant chacune une roue, chaque roue comportant un bandage pneumatique ou non pneumatique en contact avec le sol, le véhicule ayant un temps caractéristique, fonction de son inertie, correspondant au déphasage temporel dans l'apparition des poussées aux roues à l'avant et à l'arrière, à partir d'une commande du conducteur du véhicule, le véhicule étant pourvu d'actionneurs pour agir sur les forces transmises au sol par chacune des roues. Le système comprenant en outre :

(a) des moyens pour relever en temps réel la valeur réelle d'une variable choisie dans le groupe constitué par la poussée transversale « Y » et la charge verticale « Z », toutes deux agissant au centre de chacune des roues avant et arrière ;

(b) un contrôleur permettant de, à partir des commandes du conducteur du véhicule et en en tenant compte du temps caractéristique, calculer en temps réel la valeur souhaitée d'au moins un paramètre de référence qui peut être corrélé auxdites valeurs d'une variable choisie, ledit contrôleur permettant de faire des comparaisons entre la valeur souhaitée et la valeur réelle pour obtenir un signal d'erreur ; et

(c) des moyens pour agir sur les actionneurs pour minimiser le signal d'erreur.

Selon différents aspects, comme expliqué ci-dessus pour la méthode de contrôle de la stabilité d'un véhicule, la variable peut être la poussée transversale réelle « Y » auquel cas le paramètre de référence peut être soit la poussée transversale désirée « $Y_{désirée}$ » soit le couple de lacet « $M_{souhaitée}$ » souhaité, ou la variable peut être la charge verticale réelle « Z » et le paramètre de référence est la charge verticale désirée « $Z_{désirée}$ ».

L'invention va être expliquée plus en détails dans la suite, à consulter avec les figures jointes dans lesquelles :

La figure 1 est un bloc diagramme illustrant l'invention ;
La figure 2 illustre le schéma d'un véhicule bicycle ;
La figure 3-a est le schéma d'un véhicule quadricycle ;
La figure 3b est une vue de côté d'un véhicule quadricycle ;
La figure 3c est une vue de face d'un véhicule quadricycle ;
La figure 4 est la courbe de rigidité de dérive linéarisée ;
Les figures 5-a, 5-b, 5-c illustrent les efforts résultant d'une commande de braquage en sinus croissant, sur sol humide à 90 km/h ;
Les figures 6-a, 6-b, 6-c illustrent les efforts résultant d'une commande de braquage en sinus croissant, sur sol humide à 90 km/h, pour un véhicule équipé d'un contrôle de la répartition d'anti-roulis ;
La figure 7 illustre les différences de trajectoire entre un véhicule avec contrôle (repère 2) et un véhicule sans contrôle de la répartition d'anti-roulis (repère 1), dans une manoeuvre avec commande de braquage en sinus croissant, sur sol humide à 90 km/h ;
La figure 8 illustre la répartition d'anti-roulis pour stabiliser le véhicule ;
Les figures 9-a, 9-b, 9-c illustrent les efforts résultant d'un évitement, sur sol humide à 90 km/h qui conduit à une déstabilisation du véhicule ;
Les figures 10a, 10b, 10c illustrent les efforts résultant d'un évitement, sur sol humide à 90 km/h, pour un véhicule équipé d'un contrôle de la répartition d'anti-roulis ;
La figure 11 illustre les différences de trajectoire entre un véhicule avec contrôle (repère 2) et un véhicule sans contrôle de la répartition d'anti-roulis (repère 1), dans cette manoeuvre d'évitement, sur sol humide à 90 km/h ;
La figure 12 illustre la répartition d'anti-roulis pour stabiliser le véhicule.

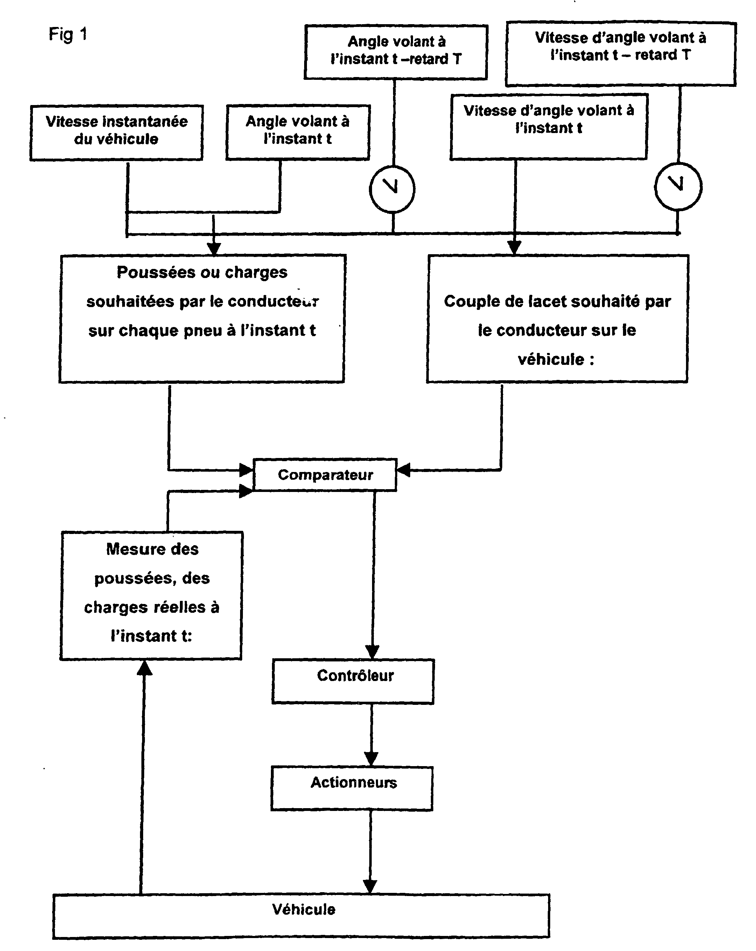

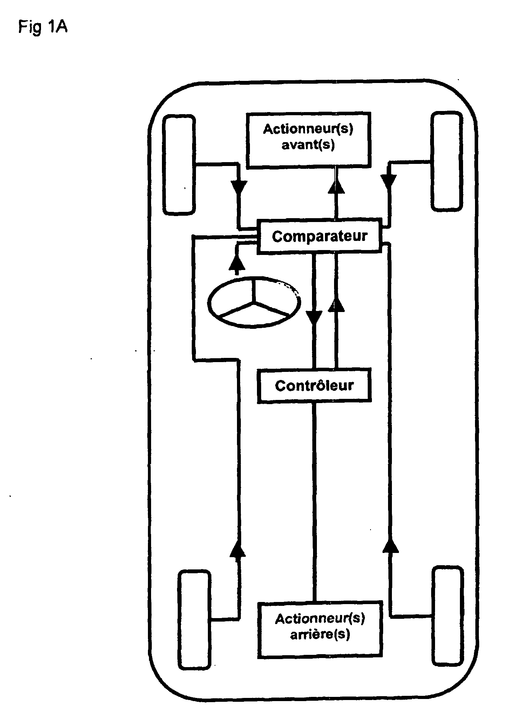

On part de l'observation que, à une vitesse donnée, on peut interpréter un angle au volant imposé par le conducteur comme une demande de poussées transversales ou de charges, ou comme une demande de couple de lacet sur le véhicule. C'est ce qui est schématisé à la partie supérieure de la figure 1. Par ailleurs, on a vu qu'il est requis, pour la mise en oeuvre de cette invention, de disposer de mesures des poussées réelles (poussées transversales des pneumatiques ou bandages élastiques utilisés dans la liaison au sol). C'est ce qui est illustré dans le bloc de gauche, partant du « véhicule », à la figure 1. Dans le cas où l'on souhaite agir sur la répartition des charges (voir d'autres explications ci-dessous concernant l'effet sur le couple de lacet de la répartition des charges), il faut disposer de mesures des charges réelles.

Le diagramme de la figure 1 superpose plusieurs méthodes : soit on interprète les actions du conducteur à un instant donné et celles qui ont précédé en demande de poussées transversales que l'on compare aux poussées transversales mesurées au centre roue, soit on interprète les actions du conducteur et celles qui ont précédé en demande de variations de charge que l'on compare aux charges mesurées au centre roue, soit on interprète les actions du conducteur en demande de couple de lacet et l'on transforme les mesures de poussées transversales au centre roue en couple de lacet mesuré pour effectuer la comparaison requise. Les écarts révélés par un comparateur permettent à un contrôleur de décider la correction nécessaire en agissant sur les actionneurs pour stabiliser le véhicule et le faire suivre les consignes du conducteur.

Sur un véhicule, le braquage des roues entraîne une poussée de l'essieu avant, un mouvement de caisse puis une poussée de l'essieu arrière. La poussée de l'essieu arrière intervient donc avec un léger retard par rapport à la commande au volant. Pour une meilleure détermination des actions de corrections de trajectoire, l'invention propose de tenir compte de ce retard.

Les valeurs de consigne des efforts dépendent alors de l'action sur la commande de braquage à l'instant présent t et de l'instant t moins le retard lié à l'inertie du véhicule (noté T). Ce temps de retard ne dépend que des caractéristiques du véhicule (inertie, empattement) et des rigidités de dérives de sa monte pneumatique. Une expression de ce temps de retard est :

$$T = \frac{I_{V\acute{e}hicule}V}{I_1{}^2 D_{Av} + I_2{}^2 D_{Arr}}$$

| | |
|---|---|
| V | est la vitesse instantanée du véhicule |
| $I_{v\acute{e}hicule}$ | est l'inertie du véhicule en lacet (noté aussi Iz) |
| L1 | est la distance de l'essieu avant au centre de gravité |
| L2 | est la distance de l'essieu arrière au centre de gravité |
| Dav, Darr | sont les rigidités de dérive des essieux avant et arrière |

(somme des rigidités de dérive des pneus d'un même essieu)

Supposons que les efforts de poussée du train avant sont inférieurs aux efforts souhaités par le conducteur (tels que déterminés par la traduction des actions du conducteur). Une action automatique permet d'obtenir une résultante d'efforts sur le châssis conforme aux souhaits du conducteur et permet donc d'éviter le sous virage.

Parmi les différents actionneurs sur lesquels on peut agir, il y a bien entendu les freins. En variante ou en complément d'une action sur les freins, une action sur un moyen de braquage complémentaire, imposé par exemple au moyen d'un moteur pas à pas irréversible inséré dans la colonne de direction, permet aussi de se rapprocher de la résultante d'efforts sur le châssis conforme aux souhaits du conducteur. Une autre possibilité de réalisation de l'action sur un moyen de braquage consiste par exemple à envoyer les ordres de commande appropriés au contrôleur décrit dans le brevet US 5,884,724.

En variante ou en complément encore des actions sur les freins ou sur la direction évoquées ci-dessus, une action sur la répartition d'antiroulis entre l'essieu avant et l'essieu arrière permet aussi d'agir sur les poussées développées respectivement par les essieux avant et arrière. Cela revient à modifier la charge supportée par chaque roue en modifiant la répartition entre les roues de la charge globale (inchangée), tout en respectant le transfert de charge vers les roues extérieures au virage.

En effet, lorsqu'un véhicule s'écarte de la trajectoire souhaitée par le conducteur, c'est que l'un l'autre ou plusieurs des pneumatiques deviennent incapables de développer le surcroît de poussée transversale qu'il aurait fallu développer pour compenser les forces d'inerties. On peut dire que le ou les pneumatiques considérés saturent. En fait, ce phénomène de saturation, lorsqu'il débute, concerne la plupart du temps un seul pneumatique d'un seul essieu. De ce fait, l'un des essieux devient incapable de développer la poussée transversale attendue et le véhicule survire ou sousvire, selon que la saturation concerne l'essieu arrière ou l'essieu avant.

Par ailleurs, l'on sait qu'en virage, la force centrifuge surcharge les pneumatiques extérieures au virage. La répartition de cette surcharge entre l'essieu avant et l'essieu arrière dépend des caractéristiques d'antiroulis de la suspension du véhicule.

En diminuant la part d'effort d'antiroulis développé par l'essieu comportant le pneumatique dont la poussée transversale sature en premier, non seulement on permet à l'autre pneu du même essieu de développer un poussée transversale plus grande car à une charge verticale plus grande, mais aussi on va s'approcher de, voire atteindre la saturation d'un pneu de l'autre essieu, plafonnant ou diminuant d'autant les poussées transversales développées par l'autre essieu.

Si au contraire c'est la poussée de l'essieu arrière qui sature la première, le véhicule sur vire parce que les efforts de poussée du train arrière sont inférieurs aux efforts souhaités par le conducteur. Une action automatique sur les freins ou sur un moyen de braquage complémentaire ou sur la répartition d'antiroulis permet d'obtenir une résultante d'efforts sur le châssis conforme aux souhaits du conducteur et permet donc d'éviter le sur virage.

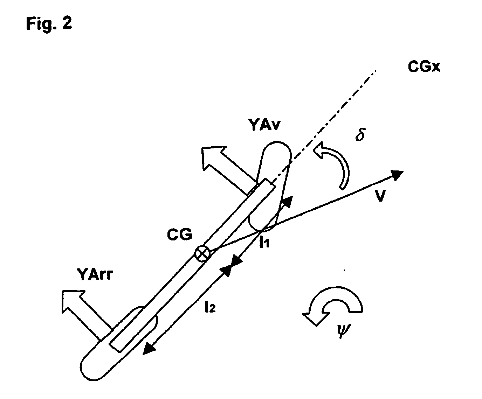

A la figure 2, on voit une représentation d'un véhicule bicycle, selon une simplification courante utilisée même pour la modélisation de véhicules à quatre roues. On voit le centre de gravité CG du véhicule, on voit l'axe longitudinal de celui-ci reliant la roue avant (braquée) et la roue arrière en passant par le centre de gravité (axe CGx). On ramène au centre de chaque essieu la somme des poussées transversales Yav, Yarr s'exerçant au niveau des roues de chaque essieu considéré. On voit l'angle $\delta$ que fait le vecteur vitesse par rapport à l'axe longitudinal du véhicule, et la vitesse de lacet $\psi$ du véhicule autour de l'axe vertical du véhicule. La distance entre l'essieu avant (respectivement l'essieu arrière) et le centre de gravité CG est notée $l_1$ (respectivement $l_2$). Un tel schéma permet déjà d'obtenir des résultats intéressants.

Mais l'invention propose, pour une meilleure détermination des actions de corrections de trajectoire, de tenir compte des efforts au sol roue par roue. Au sein d'un essieu, la comparaison des poussées de chaque pneu aux poussées souhaitées permet de connaître exactement la source de saturation de l'ensemble de l'essieu et permet ainsi de choisir des actions de corrections plus efficaces.

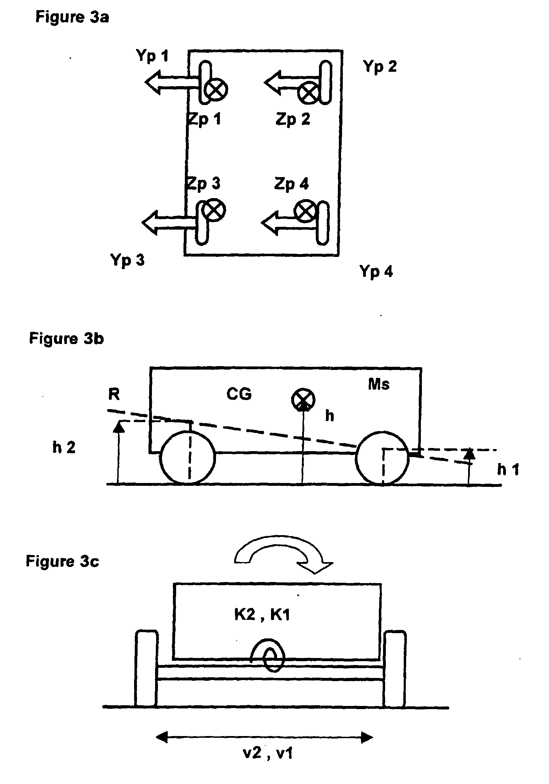

A la figure 3a, on a schématisé un véhicule à quatre roues, dont on voit le centre de gravité CG. On n'a représenté ni l'angle $\delta$ que fait le vecteur vitesse par rapport à l'axe longitudinal du véhicule, ni l'angle de lacet $\psi$ pour ne pas surcharger la figure. Le modèle quadricycle est plus proche du véhicule dans le sens où il prend en compte les efforts sur les centres des quatre roues et qu'il exprime les transferts de charge latéraux liés à la prise de roulis du véhicule en virage. Le modèle quadricycle est alors plus complet que le modèle bicycle et rend mieux compte de l'action des transferts de charge sur la dynamique du véhicule. Les charges sur chacun des quatre pneus sont représentées par Zp1, Zp2, Zp3, Zp4. Les poussées transversales (ou efforts latéraux) apparaissant sur chacune des roues indexés par les repères Yp1, Yp2, Yp3, Yp4.

A la figure 3b, on voit l'axe de roulis R du véhicule, la hauteur h du centre de gravité CG par rapport au sol, la hauteur $h_1$ de l'axe de roulis R par rapport au sol dans le plan vertical passant par le centre des aires de contact au sol des pneus de l'essieu avant, et la hauteur $h_2$ de l'axe de roulis par rapport au sol dans le plan vertical passant par le centre des aires de contact au sol des pneus de l'essieu arrière. Le modèle quadricycle fait l'hypothèse d'une masse suspendue MS reposant sur 2 essieux. Cette masse suspendue a la possibilité de basculer autour de l'axe de roulis R.

A la figure 3c, on voit le couple de renversement du véhicule provoqué par le transfert de charge dans la direction transversale, $K_1$ et $K_2$ représentant les raideurs d'anti-roulis respectivement à l'essieu avant et à l'essieu arrière. Sur cette vue, on a noté « v1 » la largeur de la voie du véhicule à l'avant et « v2 » la largeur de la voie du véhicule à l'arrière.

La surveillance des quatre appuis et des signaux d'erreur générés entre les poussées souhaitées et les poussées réelles permet d'optimiser les quatre appuis en agissant de façon appropriée sur les actionneurs, comme on va l'expliquer dans la suite.

Les règles de pilotage des actionneurs exposées ici sont schématisées par le bloc « Contrôleur » à la figure 1, lequel commande le ou les « actionneurs » dont il a été question ci-dessus.

Les paragraphes ci-dessus se rapportent à ce que l'on appelle communément le régime stationnaire (ou le régime établi). En considérant un régime transitoire typique d'une manoeuvre d'urgence (évitement, changement de file), la vitesse de sollicitation du volant est plutôt considérée comme équivalente à un couple de lacet souhaité sur le véhicule. Si le couple réel est inférieur au couple souhaité, le véhicule ne tourne pas assez. Si ce couple réel est supérieur au couple souhaité, le véhicule tourne trop . Le contrôleur agit alors de façon appropriée sur l'un ou l'autre ou plusieurs des actionneurs possibles que sont les freins ou sur un moyen de braquage complémentaire ou sur la répartition d'antiroulis permet d'obtenir un couple de lacet imposé au châssis conforme aux souhaits du conducteur.

Adoptons les expressions conventionnelles suivantes :

Poussée de l'essieu avant souhaitée : $Y_{Av}souhaité$

Poussée de l'essieu arrière souhaitée : $Y_{Arr}souhaité$

Poussée des pneus souhaitée : $Yp_{1,2,3,4}souhaité$

Charge sur chaque pneu souhaitée : $Zp_{1,2,3,4}souhaité$

Couple de lacet souhaité : $M_{z\ souhaité}$

$\psi$ l'angle de lacet du véhicule

$\delta$ l'angle de dérive du véhicule

$\alpha_c$ l'angle de braquage d'une roue

$\gamma t$ l'accélération transversale

$D_{1,2,3,4}$ les rigidités de dérive des pneumatiques.

$D_{Av}$ et $D_{Arr}$ les rigidités de dérive des essieux avant et arrière

On considère d'abord ci-dessous un véhicule bicycle (voir figure 2).

Les équations du bicycle sont :

$$M\gamma_t = MV(\dot{\delta}+\dot{\psi}) = Y_{Av} + Y_{Arr} \qquad (1)$$

où M est la masse du véhicule, V la vitesse longitudinale du véhicule, $Y_{Av}$ la poussée transversale sur l'essieu avant, $Y_{Arr}$ la poussée transversale sur l'essieu arrière, l'équation (1) exprimant que les poussées transversales équilibrent l'accélération transversale,

$$I_z \ddot{\psi} = l_1 Y_{Av} - l_2 Y_{Arr} \quad (2)$$

où $I_z$ est l'inertie de lacet, $l_1$ la distance de l'essieu avant au centre de gravité, $l_2$ la distance de l'essieu arrière au centre de gravité, l'équation (2) exprimant l'équilibre des moments.

Le mouvement de corps rigide du bicycle et le braquage des roues de l'essieu avant permet d'exprimer les dérives des pneus à l'avant et à l'arrière selon :

Dérive du train avant:

$$\delta_{Av} = \delta + l_1\frac{\dot{\psi}}{V} - \alpha_C \qquad (3)$$

Dérive du train arrière:

$$\delta_{Arr} = \delta - l_2\frac{\dot{\psi}}{V} \qquad (4)$$

La grandeur l1 (respectivement l2) est la distance de l'essieu avant (respectivement arrière) au centre de gravité CG du véhicule. La géométrie du véhicule est présentée sur la figure 2.

Ces dérives des pneus entraîne des efforts de poussées sur le bicycle :

$$Y_{Av} = -D_{Av}\delta_{Av} \tag{5}$$

$$Y_{Arr} = -D_{Arr}\delta_{Arr} \tag{6}$$

En remplaçant les équations 3 et 4 dans 5 et 6, on obtient:

$$Y_{Av} = -D_{Av}\left( \delta + l_1 \frac{\dot{\psi}}{V} - \alpha_C \right) \tag{7}$$

$$Y_{Arr} = -D_{Arr}\left( \delta - l_2 \frac{\dot{\psi}}{V} \right) \tag{8}$$

En remplaçant les équations (7) et (8) dans les équations (1) et (2), on obtient un système qui ne s'exprime qu'en fonction de la vitesse de lacet (et de sa dérivée) , de l'angle de dérive (et sa dérivée) et des caractéristiques du véhicule:

$$MV(\dot{\delta}+\dot{\psi}) = D_{Av}\left( \delta + \frac{l_1 \dot{\psi}}{V} - \alpha_c \right) + D_{Arr}\left( \delta - \frac{l_2 \dot{\psi}}{V} \right) \tag{1 bis}$$

$$I_z \ddot{\psi} = l_1\left( D_{Av}\left( \delta + \frac{l_1 \dot{\psi}}{V} - \alpha_c \right) \right) - l_2\left( D_{Arr}\left( \delta - \frac{l_2 \dot{\psi}}{V} \right) \right) \tag{2 bis}$$

Par une transformation de Laplace, on peut exprimer les fonctions de transfert entre la vitesse de lacet et l'angle au volant, entre la dérive de caisse et l'angle au volant. La partie statique (c'est à dire la partie relative à une fréquence nulle) de cette fonction de transfert s'exprime alors simplement en fonction des caractéristiques du véhicule (coefficient de proportionnalité) et de la vitesse d'avancement :

$$\dot{\psi} = \frac{1}{l_1 + l_2} \frac{V}{1 + \dfrac{V^2}{\dfrac{D_{AV}D_{Arr}(l_1 + l_2)^2}{M(D_{Arr}l_2 - D_{Av}l_1)}}} \alpha_c \tag{9}$$

$$\delta = \frac{1}{l_1 + l_2} \frac{l_2 - \dfrac{l_1 M V^2}{D_{Arr}(l_1 + l_2)}}{1 + \dfrac{V^2}{\dfrac{D_{AV} D_{Arr}(l_1 + l_2)^2}{M(D_{Arr}l_2 - D_{Av}l_1)}}} \alpha_c \tag{10}$$

Ces expressions peuvent se simplifier en introduisant une grandeur Vc, appelée vitesse critique, assimilable à une vitesse et dépendant des caractéristiques du véhicule (masse supportée par l'essieu avant $M_{Av}$, masse supportée par l'essieu arrière $M_{Arr}$, distances l1 et l2) et de sa monte pneumatique:

$$V_c^2 = \frac{D_{Av}D_{Arr}(l_1 + l_2)^2}{M(D_{Arr}l_2 - D_{Av}l_1)} = \frac{D_{Av}D_{Arr}(l_1 + l_2)}{D_{Arr}M_{Av} - D_{Av}M_{Arr}} = \frac{l_1 + l_2}{\dfrac{M_{Av}}{D_{Av}} - \dfrac{M_{Arr}}{D_{Arr}}} \tag{11}$$

Les expressions (9) et (10) deviennent:

$$\dot{\psi} = \frac{1}{l_1 + l_2} \frac{V}{1 + \dfrac{V^2}{V_c^2}} \alpha_c$$

$$\delta = \frac{1}{l_1 + l_2} \frac{l_2 - \dfrac{l_1 M V^2}{D_{Arr}(l_1 + l_2)}}{1 + \dfrac{V^2}{V_c^2}} \alpha_c$$

Ces expressions peuvent être introduites à nouveaux dans les équations (3) et (4) puis dans les équations (5) et (6) pour obtenir les efforts souhaités par le conducteur :

$$Y_{Av}\text{désiré} = \frac{M_{Av}}{l_1 + l_2} \frac{V^2}{1 + \dfrac{V^2}{Vc^2}} \alpha_c \tag{12}$$

$$Y_{Arr}\text{désiré} = \frac{M_{Arr}}{l_1 + l_2} \frac{V^2}{1 + \dfrac{V^2}{Vc^2}} \alpha_c \tag{13}$$

On voit que ces formules expriment le fait que la demande de poussées transversales résultant des actions du conducteur ne dépend que de la commande ($\alpha_c$) elle même, de
la vitesse du véhicule (V) et d'autres paramètres qui sont tous fonctions du véhicule lui-même (c'est à dire qui décrivent le véhicule).

Enfin en dérivant l'équation (9) et en multipliant l'accélération de lacet par l'inertie de lacet, on obtient le couple de lacet Mz souhaité:

$$\ddot{\psi} = \frac{1}{l_1 + l_2} \frac{V}{1 + \dfrac{V^2}{Vc^2}} \dot{\alpha}_c$$

$$M_{désiré} = I_2 \ddot{\psi} = \frac{I_z}{l_1 + l_2} \frac{V}{1 + \dfrac{V^2}{Vc^2}} \dot{\alpha}_c \quad (14)$$

De même, la formule (14) exprime le fait que la demande de couple de lacet résultant des actions du conducteur ne dépend que de la commande ($\alpha_c$) elle même, de la vitesse

du véhicule (V) et d'autres paramètres qui sont tous fonctions du véhicule lui-même (c'est à dire qui décrivent le véhicule).

On peut même traduire les variations de commandes au volant comme des demandes de variations d'efforts dans les trains :

$$\dot{Y}_{Av\ désiré} = \frac{M_{Av}}{l_1 + l_2} \frac{V^2}{1 + \dfrac{V^2}{Vc^2}} \dot{\alpha}_c \qquad (15)$$

$$\dot{Y}_{Arr\ désiré} = \frac{M_{Arr}}{l_1 + l_2} \frac{V^2}{1 + \dfrac{V^2}{Vc^2}} \dot{\alpha}_c \qquad (16)$$

$$Y_{Arr}désiré(t) = \frac{M_{Arr}}{1 + \dfrac{V^2}{V_c^2} \dfrac{V^2}{l_1 + l_2}} \alpha_c(t - T) \qquad (17)$$

$$\dot{Y}_{Arr désiré}(t) = \frac{M_{Arr}}{l_1 + l_2} \frac{V^2}{1 + \dfrac{V^2}{Vc^2}} \dot{\alpha}_c(t - T)$$

La consigne à l'instant t dépend de la commande de braquage à l'instant t-T. Ce retard, lié à l'inertie en lacet du véhicule, apparaît comme un temps caractéristique du véhicule dans l'équation (2 bis).

$$I_z \ddot{\psi} = l_1 \left( D_{Av} \left( \delta + \frac{l_1 \dot{\psi}}{V} - \alpha_c \right) \right) - l_2 \left( D_{Arr} \left( \delta - \frac{l_2 \dot{\psi}}{V} \right) \right)$$

$$I_z \ddot{\psi} - \frac{l_1^2 D_{Av} + l_2^2 D_{Arr}}{V} \dot{\psi} = \left( l_1 D_{Av} - l_2 D_{Arr} \right) \delta - l_1 D_{Av} \alpha_c$$

La constante de temps en lacet est donc:

$$T = \frac{I_Z V}{l_1^2 D_{Av} + l_2^2 D_{Arr}} \qquad (18)$$

On suppose que l'on peut mesurer à chaque instant les poussées transversales Y pour toutes les roues, les variations desdites poussées Y, et les variations d'angle au volant On propose de déclencher un système de contrôle de trajectoire dès que L'écart entre les efforts souhaités et les efforts réels mesurés est trop important. Le critère de stabilité ainsi proposé exprime le fait que le véhicule reste stable tant que cet écart est faible (adéquation entre le souhait du conducteur et la réalité).

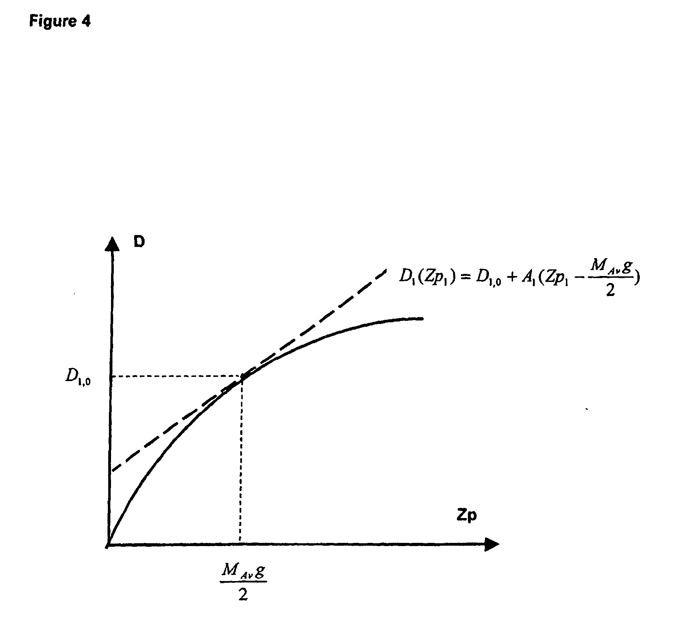

Ce critère de stabilité rend compte du fait que la poussée du pneu sature soit parce que le pneu n'est plus linéaire avec la dérive, soit parce que le pneu n'est plus linéaire avec la charge appliquée. Pour mieux détecter cette double saturation, l'hypothèse est faite que le pneu est linéaire par rapport à la charge et à la dérive. Cette linéarisation est illustrée par la figure 4. On voit en trait continu une courbe réelle donnant la valeur de la rigidité de dérive d'un pneu en fonction de la charge appliquée au pneu, et en trait discontinu, l'hypothèse retenue par la linéarisation, donnant la valeur de la rigidité de dérive d'un pneu en fonction de la charge appliquée au pneu. On voit que l'écart par rapport à la réalité est croissant quand on s'approche de la saturation (en charge) du pneu. Par ailleurs, le modèle linéaire représentant la rigidité de dérive du pneu par rapport à la charge doit donner des résultats comparables à la réalité près du point de fonctionnement de manière à ne pas déclencher un système dans des situations de conduite normales (voir zone de rencontre des courbes en trait continu et en trait discontinu). La solution proposée consiste à modéliser un pneu théorique qui aurait une rigidité de dérive linéaire (droite en trait discontinu), tangente à une courbe de rigidité de dérive réelle au point de fonctionnement statique $M_{Av}$ g /2, c'est à dire sans transfert de charge.

En linéarisant l'expression de la rigidité de dérive d'un pneu de l'essieu avant, on a :

$$D_1(Zp_1) = D_{1,0} + \left(\frac{\partial D_1}{\partial Z}\right)_0 (Zp_1 - \frac{M_{Av}g}{2}) \quad (19)$$

$\frac{\partial D}{\partial Z}$ est la sensibilité de la rigidité de dérive au transfert de charge au voisinage de la charge statique MAv g/2. On notera cette sensibilité A1 à l'avant et A2 à l'arrière. $D_{1,0}$ est la rigidité de dérive du pneu avant sous charge statique MAv g/2.

La rigidité de dérive d'un pneu avant est donc du type :

$$D_1(Zp_1) = D_{1,0} + A_1 * (Zp_1 - \frac{M_{Av}g}{2}) \qquad (19 \text{ bis})$$

La rigidité de dérive d'un pneu arrière est donc du type :

$$D_3(Zp_3) = D_{3,0} + A_2 * (Zp_3 - \frac{M_{Arr}g}{2})$$

De même, la suspension est modélisée par des relations linéaires donnant des transferts de charge en régime permanent. Les notations adoptées pour décrire les suspensions sont les suivantes :

Ms    Masse suspendue du véhicule
K1    Rigidité de la barre anti-roulis à l'avant
K2    Rigidité de la barre anti roulis à l'arrière
h1    Hauteur de centre de roulis essieu avant
h2    Hauteur de centre de roulis essieu arrière
h     Hauteur du centre de gravité
V 1   Voie du train avant
V2    Voie du train arrière

Ces notations sont illustrées par les figures 3-a, 3-b, 3-c.

Par les expressions des poussées désirées , et en utilisant le modèle de suspension linéaire, le transfert de charge escompté sur l'essieu 1 est :

$$\Delta Z_{Av} désiré = \frac{1}{v_1}\left[\frac{K_1 h}{K_1 + K_2 - M_S gh} + \frac{M_{Av}}{M_S} h_1\right]\frac{M_S}{1 + \frac{V^2}{V_c^2}}\frac{V^2}{l_1 + l_2}\alpha_c \quad (20)$$

De plus, les mouvements de caisse sont en retard sur le braquage volant avec un temps de retard donné par l'expression (18).

$$\Delta Z_{Av} d\acute{e}sir\acute{e}(t) = \frac{1}{v_1} \left[ \frac{K_1 h}{K_1 + K_2 - M_S g h} + \frac{M_{Av}}{M_S} h_1 \right] \frac{M_S}{1 + \frac{V^2}{V_c^2}} \frac{V^2}{l_1 + l_2} \alpha_c(t - T) \quad (20 \text{ bis})$$

Sur les pneus du train avant, la charge de consigne est alors la somme de la charge statique sur un quart de véhicule et du transfert de charge sur l' essieu.

$$Zp_1 d\acute{e}sir\acute{e} = \frac{M_{Av} g}{2} + \Delta Z_{Av} d\acute{e}sir\acute{e}$$

$$Zp_2 d\acute{e}sir\acute{e} = \frac{M_{Av} g}{2} - \Delta Z_{Av} d\acute{e}sir\acute{e}$$

Sur le train avant, les charges verticales attendues sont :

$$Zp_1 d\acute{e}sir\acute{e}(t) = \frac{M_{Av} g}{2} + \frac{1}{v_1} \left[ \frac{K_1 h}{K_1 + K_2 - M_S g h} + \frac{M_{Av}}{M_S} h_1 \right] \frac{M_S}{1 + \frac{V^2}{V_c^2}} \frac{V^2}{l_1 + l_2} \alpha_c(t - T) \quad (21)$$

(21 bis)

$$Zp_2 d\acute{e}sir\acute{e}(t) = \frac{M_{Av} g}{2} - \frac{1}{v_1} \left[ \frac{K_1 h}{K_1 + K_2 - M_S g h} + \frac{M_{Av}}{M_S} h_1 \right] \frac{M_S}{1 + \frac{V^2}{V_c^2}} \frac{V^2}{l_1 + l_2} \alpha_c(t - T)$$

Sur le train arrière, les charges verticales attendues sont :

$$Zp_3 d\acute{e}sir\acute{e}(t) = \frac{M_{Arr} g}{2} + \frac{1}{v_2} \left[ \frac{K_2 h}{K_1 + K_2 - M_S g h} + \frac{M_{Arr}}{M_S} h_2 \right] \frac{M_S}{1 + \frac{V^2}{V_c^2}} \frac{V^2}{l_1 + l_2} \alpha_c(t - T) \quad (22)$$

(22 bis)

$$Zp_4 d\acute{e}sir\acute{e}(t) = \frac{M_{Arr} g}{2} - \frac{1}{v_2} \left[ \frac{K_2 h}{K_1 + K_2 - M_S g h} + \frac{M_{Arr}}{M_S} h_2 \right] \frac{M_S}{1 + \frac{V^2}{V_c^2}} \frac{V^2}{l_1 + l_2} \alpha_c(t - T)$$

Connaissant la charge sur chaque pneu, par la modélisation linéaire du pneumatique (équation 19 bis), on déduit la poussée de consigne sur chacun des 4 pneus :

$$Yp_1 désiré = -D_1(Zp_1 désiré)*\delta_{Av} désiré$$

D'après les équations (3), (4), (9) et (10) les dérives pneu désirées sont :

$$\delta_{Av} désiré(t) = \frac{\dfrac{M_{Av}}{D_{Av}}}{1 + \dfrac{V^2}{V_c^2}} \frac{V^2}{l_1 + l_2} \alpha_c(t) \tag{23}$$

$$\delta_{Arr} désiré(t) = \frac{\dfrac{M_{Arr}}{D_{Arr}}}{1 + \dfrac{V^2}{V_c^2}} \frac{V^2}{l_1 + l_2} \alpha_c(t - T) \tag{24}$$

En utilisant les expressions de la rigidité de dérive (19 bis), de la charge désirée (21) et de la dérive pneu désirée (23), la poussée de consigne est alors :

$$Yp_1 désiré(t) = \frac{D_{1,0} + A_1(Zp_1 désiré(t) - \dfrac{M_{Av}g}{2})}{D_{Av}} \frac{M_{Av}}{1 + \dfrac{V^2}{V_c^2}} \frac{V^2}{l_1 + l_2} \alpha_c(t) \tag{25}$$

$$Yp_2 désiré(t) = \frac{D_{2,0} + A_1(Zp_2 désiré(t) - \dfrac{M_{Av}g}{2})}{D_{Av}} \frac{M_{Av}}{1 + \dfrac{V^2}{V_c^2}} \frac{V^2}{l_1 + l_2} \alpha_c(t) \tag{25 bis}$$

De même, sur l'essieu arrière, en tenant compte du retard de la poussée de l'essieu arrière, on a :

$$Yp_3 désiré(t) = \frac{D_{3,0} + A_2(Zp_3 désiré(t) - \dfrac{M_{Arr}g}{2})}{D_{Arr}} \frac{M_{Arr}}{1 + \dfrac{V^2}{V_c^2}} \frac{V^2}{l_1 + l_2} \alpha_c(t - T) \tag{26}$$

$$Yp_4 désiré(t) = \frac{D_{4,0} + A_2(Zp_4 désiré(t) - \dfrac{M_{Arr}g}{2})}{D_{Arr}} \frac{M_{Arr}}{1 + \dfrac{V^2}{V_c^2}} \frac{V^2}{l_1 + l_2} \alpha_c(t - T) \tag{26 bis}$$

On suppose que l'on peut mesurer à chaque instant les poussées transversales Y pour toutes les roues, les variations desdites poussées Y, et les variations d'angle au volant On propose de déclencher un système de contrôle de trajectoire dès que l'écart entre les efforts souhaités et les efforts réels mesurés est trop important. Le critère de stabilité ainsi proposé exprime le fait que le véhicule reste stable tant que cet écart est faible (adéquation entre le souhait du conducteur et la réalité).

L'avantage de détecter ces écarts sur chaque pneu est que le système connaît plus précisément la cause de la perte de contrôle du véhicule.

Une simulation de la dynamique d'un véhicule dans des manoeuvres typiques est présentée à l'aide des figures suivantes. Le modèle de simulation utilisé est un modèle quadricycle avec 7 degrés de liberté, permettant de traduire l'équilibre du véhicule en lacet, tangage, roulis, et rotation des quatre roues. Les quatre simulations présentées illustre un véhicule dont les caractéristiques sont celles d'une Golf, roulant à une vitesse de 90 km /h.

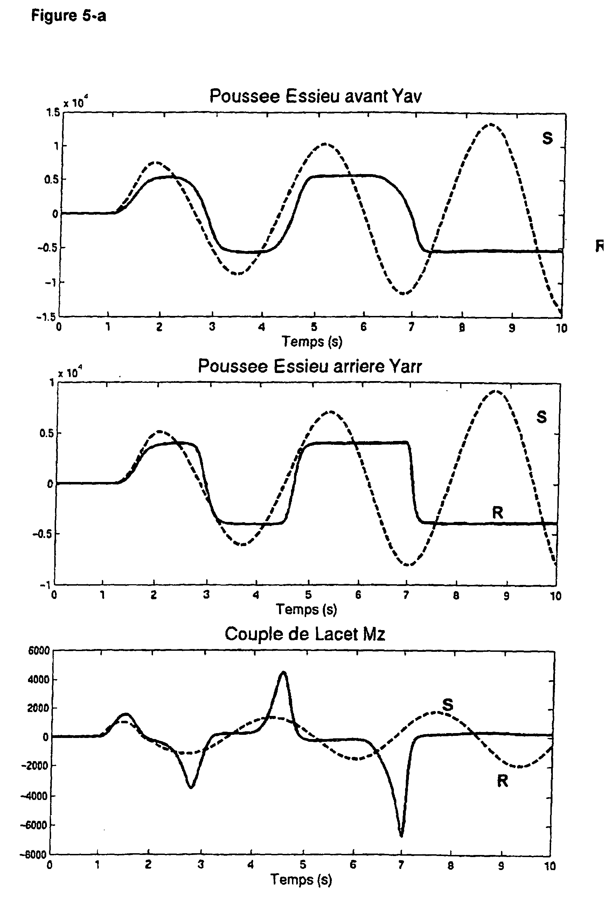

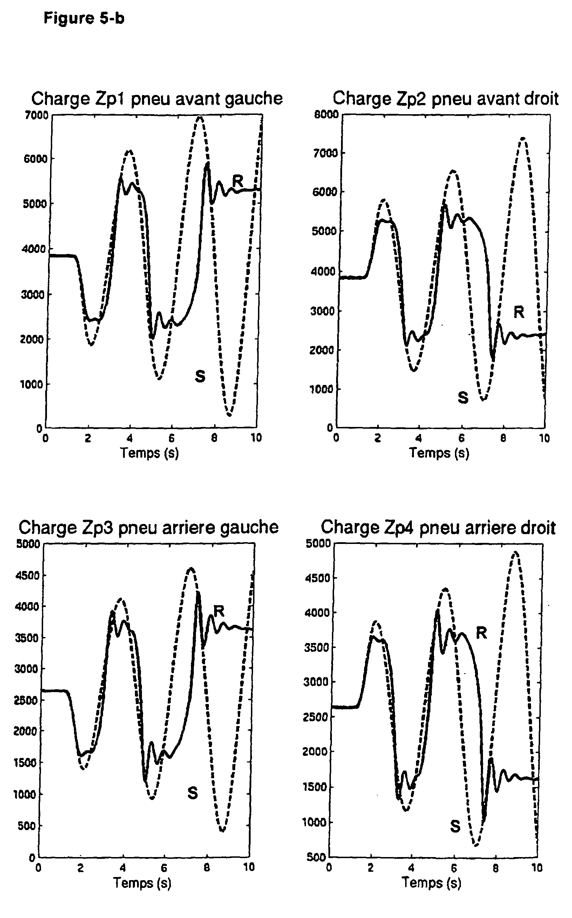

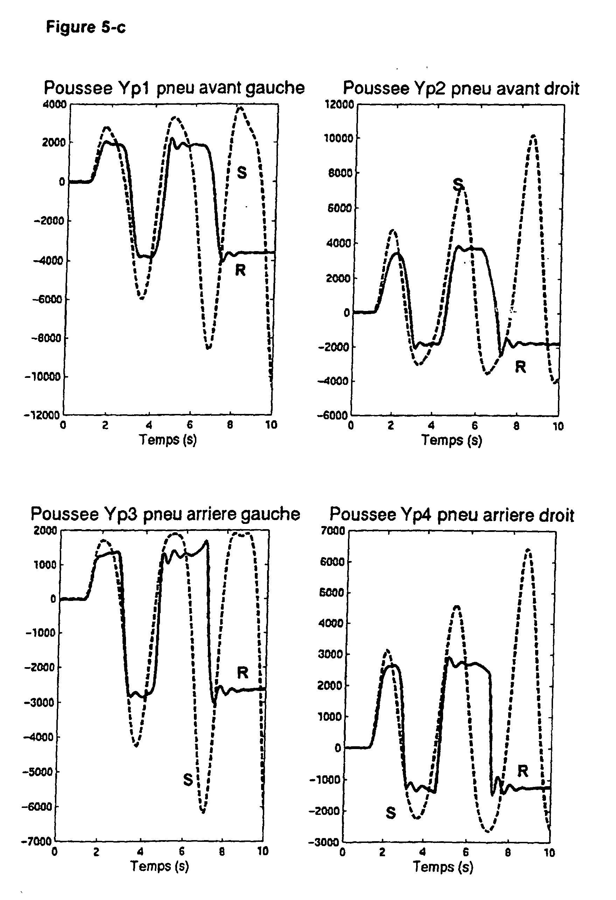

Dans la première simulation (figures 5a, 5b et 5c), on entre comme consigne volant, une sollicitation en sinus de fréquence 0.5 Hz, d'amplitude croissante, sur sol humide. Cette manoeuvre conduit à la perte de contrôle du véhicule. A toutes les figures illustrant des poussées pneu (Yp), les poussées essieu (Yav Yarr), les charges (Zp) ou des couples de lacet (Mz), les courbes en trait continu, désignées par « R », représentent les valeurs réelles, alors que les courbes en trait interrompu, notées « S », représentent les valeurs souhaitées par le conducteur.

Sur la figure 5-a, les courbes présentées montrent l'écart entre la somme des deux poussées d'un train (train avant ou train arrière selon les indices « Av » ou « Arr » des figures) et l'effort souhaité par le conducteur, au sens des formules (12) (13) (14)On peut noter la saturation des efforts du pneumatique par rapport aux attentes du conducteur et le déphasage entre les efforts réels et les efforts attendus.

Sur la figure 5-b, on constate les écarts entre les charges réelles et les charges souhaitées par le conducteur comme exprimées par les formules (21) (21 bis) (22) (22 bis). Sur la figure 5-c, cette perte de contrôle se détecte à travers la saturation des poussées des pneus observées comme l'écart entre les poussées de consignes exprimées par les formules (25), (25 bis), (26), (26 bis) et les poussées réelles. Parallèlement, on constate que les efforts réels sont en retard sur la consigne, illustrant le déphasage entre l'entrée du conducteur et les réactions de son véhicule. A chaque fois, le repère « R » représente les efforts réels (en trait plein) et le repère « S » se réfère à la consigne exprimée par la méthode proposée (en trait pointillé).

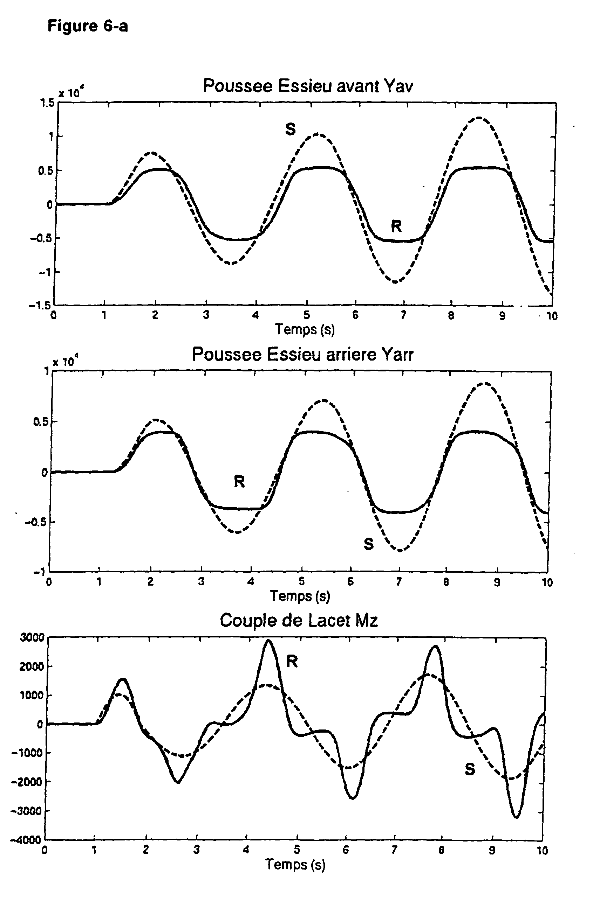

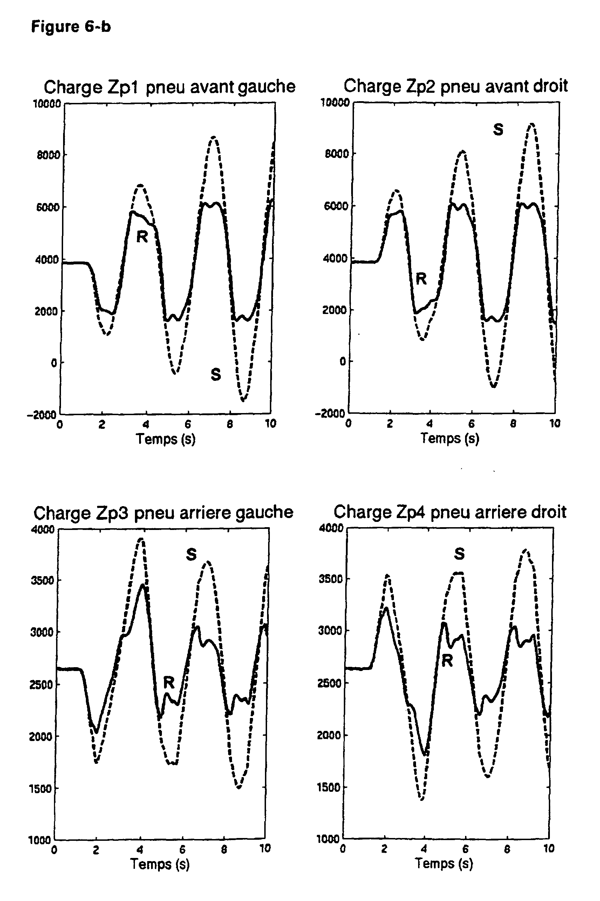

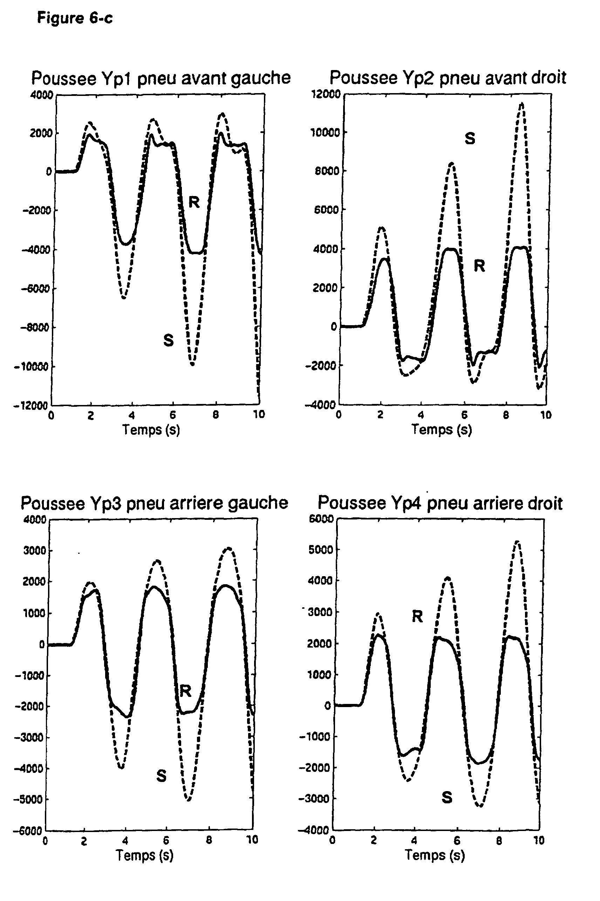

Dans la seconde simulation (figure 6a, 6b, 6c, 7 et 8), on montre comment une modification de la répartition avant/arrière d'antiroulis, pilotée comme expliqué ci-dessus, permet de stabiliser la trajectoire du véhicule. La manoeuvre est identique à la précédente (commande de braquage en sinus croissant sur sol mouillé à 90 km/h). Dès la détection d'efforts réels trop importants en lacet, l'antiroulis est renforcé à l'avant du véhicule et allégé de la même quantité à l'arrière de manière à rendre le véhicule stable au plus vite et de mieux utiliser le potentiel d'adhérence des 4 pneumatiques . La saturation des poussées est mieux gérée et permet des déphasages moins importants, donc des couples de lacet mieux maîtrisé et des renvois de caisse mieux identifiés. De nouveau, à chaque fois, le repère « R » représente les efforts réels (en trait plein) et le repère « S » se réfère à la consigne exprimée par la méthode proposée (en trait pointillé).

La figure 6-a présente les poussées de l'essieu avant, de l'essieu arrière et le couple de lacet du véhicule réels et souhaités. La figure 6-b représente les charges verticales Zp réelles et souhaitées sur les quatre pneus. La figure 6-c représente les poussées latérales Yp réelles et souhaitées sur les quatre pneus.

Si la répartition dynamique d'anti-roulis ne permet pas d'éviter totalement la saturation du pneu, dans les conditions d'adhérence présentée, elle permet en tout cas, de minimiser le signal d'erreur et de réduire le retard entre les commandes du conducteur et les réactions du véhicule (figures 6-b, 6-c).

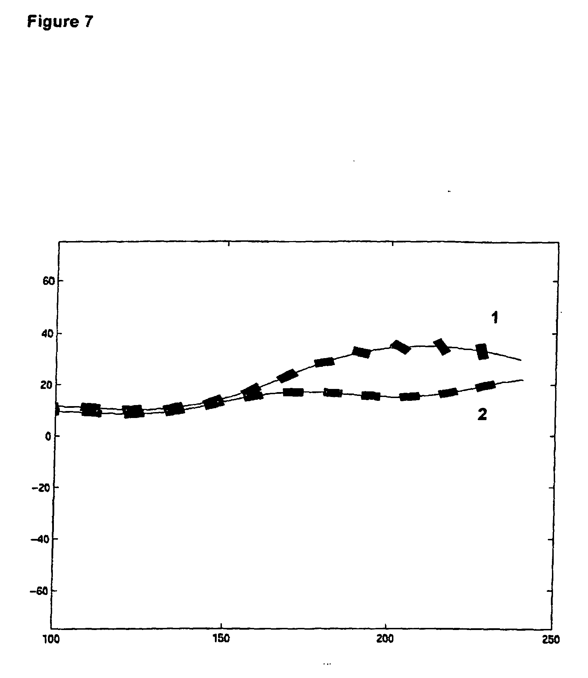

La figure 7 symbolise le véhicule (visualisé par un rectangle) sur la trajectoire décrite par son centre de gravité (illustrée par une courbe continue). Dans cette représentation, l'attitude du véhicule est visible au travers de l'angle que fait le véhicule avec la trajectoire. Le déphasage entre l'attitude réelle du véhicule et la trajectoire souhaitée peut être observé en notant, dans certaines des positions successives illustrées à la figure7, l'angle plus ou moins grand entre l'orientation du véhicule et la tangente à la trajectoire au centre de gravité du véhicule, jusqu'à perte de contrôle du véhicule en survirage.

Cette perte de contrôle peut être anticipée dans l'écart entre le couple de lacet souhaité et le couple de lacet réel. Le couple de lacet réel est beaucoup trop important et fait pivoter le véhicule, comme on le constate sur la trajectoire (figure 7). En faisant suivre aux efforts les consignes du conducteur, telles qu'exprimées par la méthode proposée, le véhicule reste stable et suit la trajectoire souhaitée par le conducteur (repère 2 Figure 7).

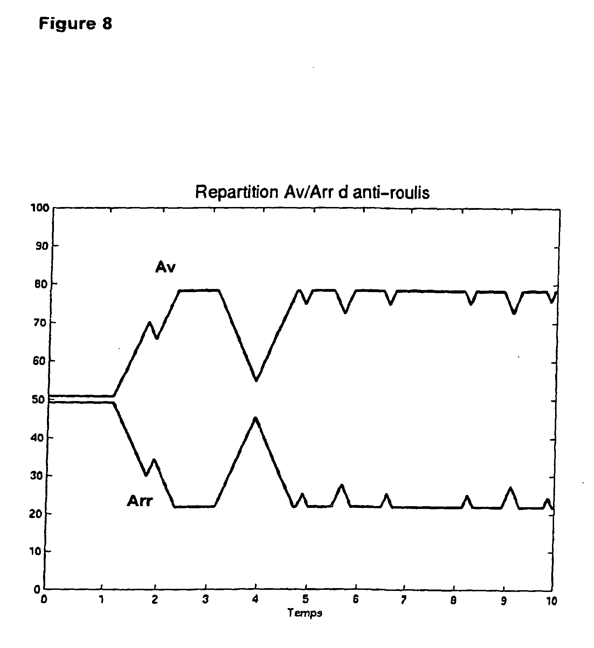

La figure 8 illustre la répartition d'anti-roulis pour stabiliser le véhicule ; Lorsqu'une saturation est observée, une quantité d'anti-roulis est prélevée sur l'essieu arrière pour augmenter l'anti-roulis avant tout en maintenant la raideur anti-roulis totale constante. Ce changement de répartition des charges stabilise le véhicule en le rendant plus sous vireur.

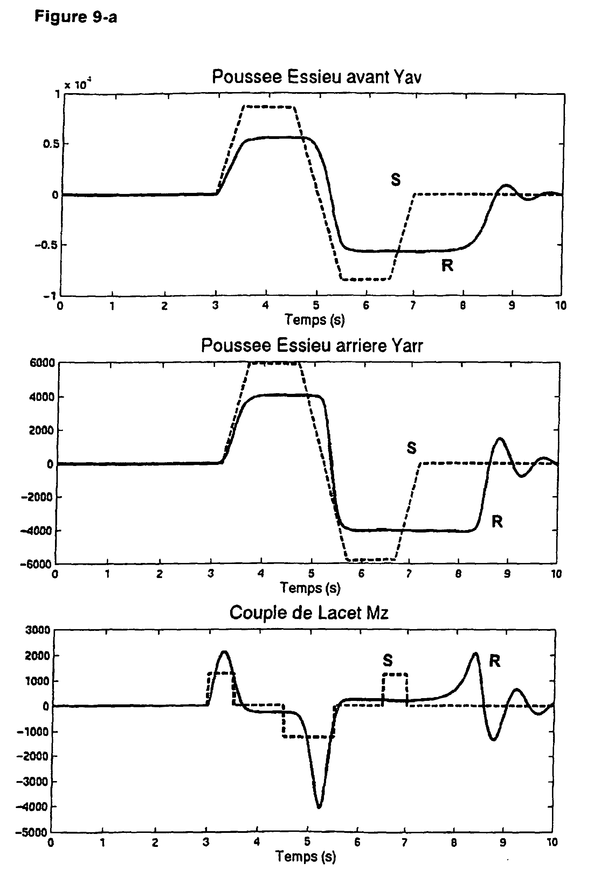

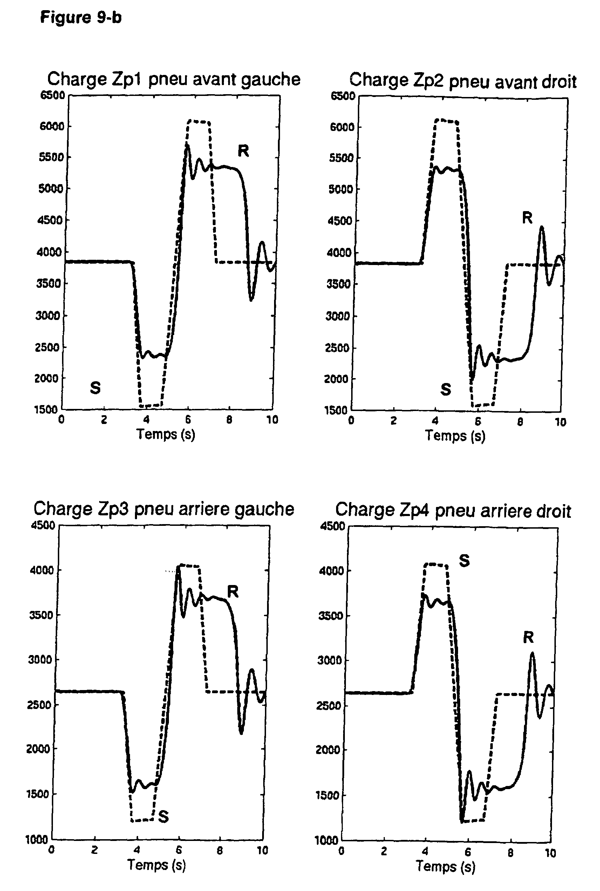

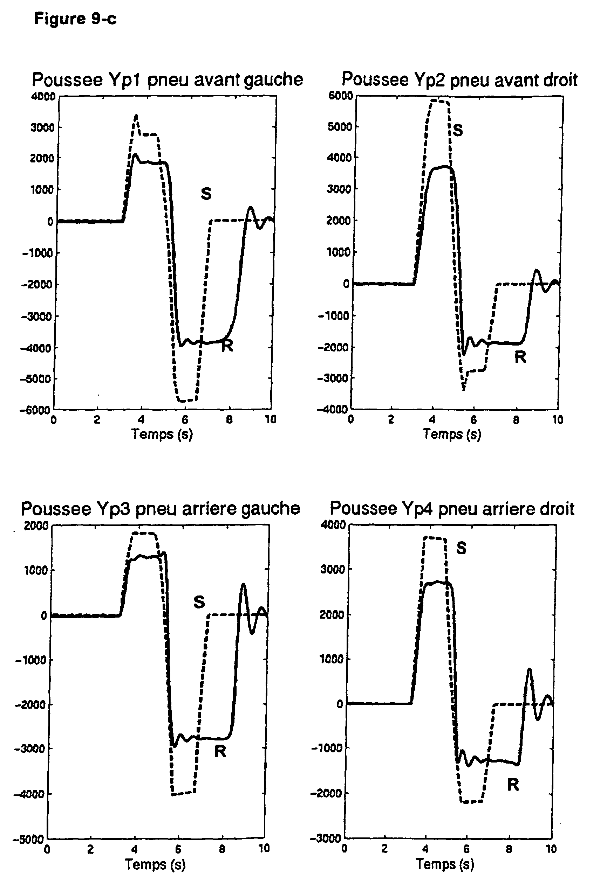

Dans la troisième simulation (figures 9a, 9b, 9c et 8), le conducteur effectue un changement de file sur sol mouillé et perd le contrôle de son véhicule. A chaque fois, le repère « R » représente les efforts réels (en trait plein) et le repère « S » se réfère à la consigne exprimée par la méthode proposée (en trait pointillé). La figure 9-a présente les poussées de l'essieu avant, de l'essieu arrière et le couple de lacet du véhicule réels et souhaités.

Sur la figure 9-a, on constate la saturation des poussées des essieux avant et arrière et le retard de poussée de l'essieu arrière conduisant à la perte de contrôle du véhicule et à une embardée. Cette embardée s'illustre aussi à travers la surtension dans le couple de lacet par rapport au couple de lacet souhaité par le conducteur. La perte de contrôle du véhicule peut être détectée au roue par roue en mesurant l'écart entre les poussées de consigne (décrites par les formules (25) (25 bis) (26) (26 bis) et les poussées réelles ou entre les charges de consigne (décrites par les formules (21) (21 bis), (22), (22 bis) et les charges réelles. La figure 9-b représente les charges verticales Zp réelles et souhaitées sur les quatre pneus. La figure 9-c représente les poussées latérales Yp réelles et souhaitées sur les 4 pneus.

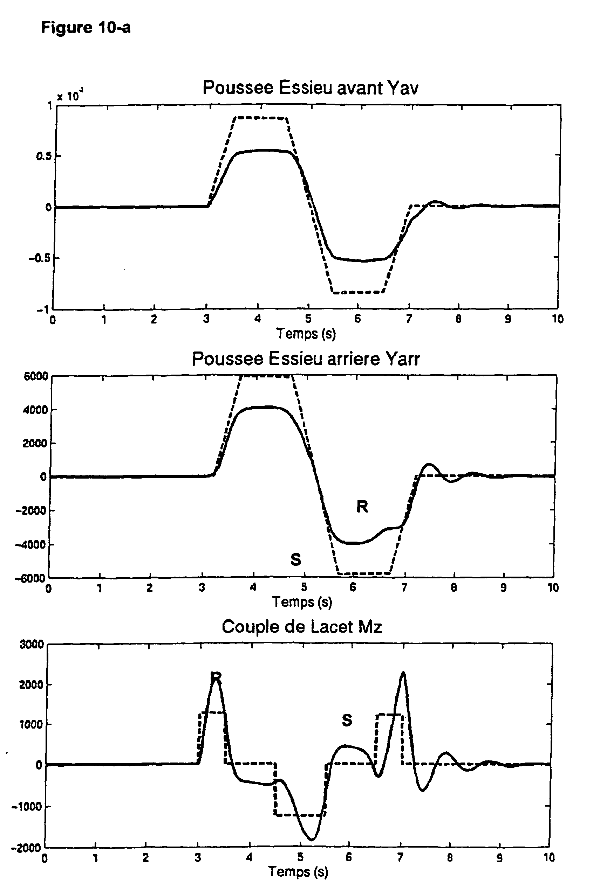

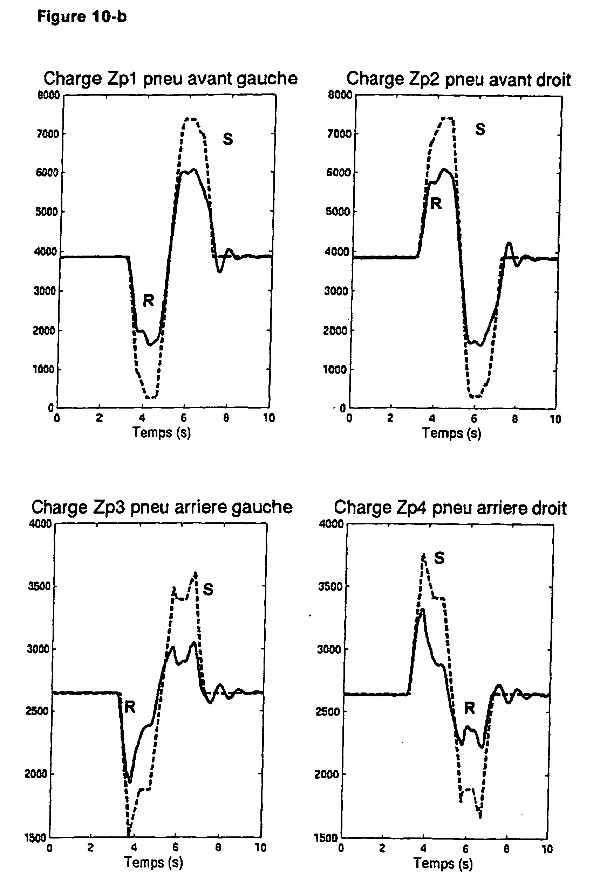

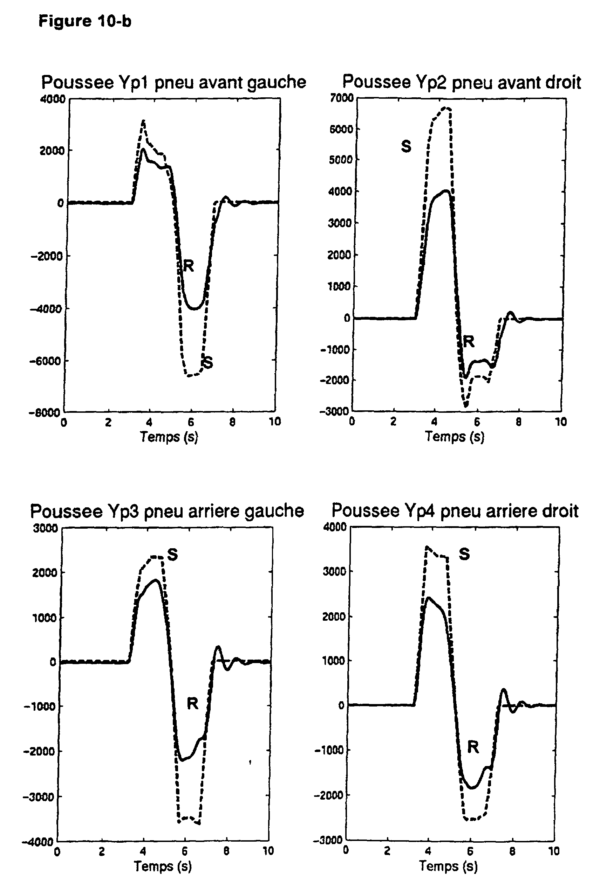

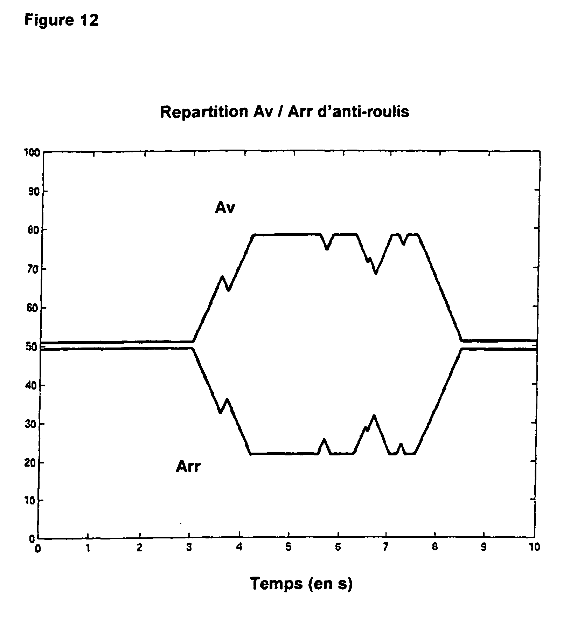

Dans la quatrième simulation (figure 10a, 10b, 10c, 11 et 12), on montre comment une modification de la répartition avant/arrière d'antiroulis, pilotée comme expliqué ci-dessus, permet de stabiliser la trajectoire du véhicule. A chaque fois, le repère « R » représente les efforts réels (en trait plein) et le repère « S » se réfère à la consigne exprimée par la méthode proposée (en trait pointillé). La manoeuvre est identique à la précédente (évitement sur sol mouillé à 90 km/h). Dès la détection d'efforts réels trop importants en lacet, l'antiroulis est renforcé à l'avant du véhicule et allégé de la même quantité à l'arrière de manière à rendre le véhicule stable au plus vite et de mieux utiliser le potentiel d'adhérence des quatre pneumatiques. La saturation des poussées est mieux gérée et permet des déphasages moins importants, donc des couples de lacet mieux maîtrisé et des renvois de caisse mieux identifiés. Par la répartition dynamique d'anti-roulis, le système réduit le retard entre la consigne du conducteur en efforts et la réaction du véhicule et lui évite l'embardée observée en absence du système. La figure 10-a présente les poussées de l'essieu avant, de l'essieu arrière et le couple de lacet du véhicule, réels et souhaités. La figure 10-b représente les charges verticales Zp, réelles et souhaitées, sur les quatre pneus. La figure 10-c représente les poussées latérales Yp, réelles et souhaitées, sur les quatre pneus.

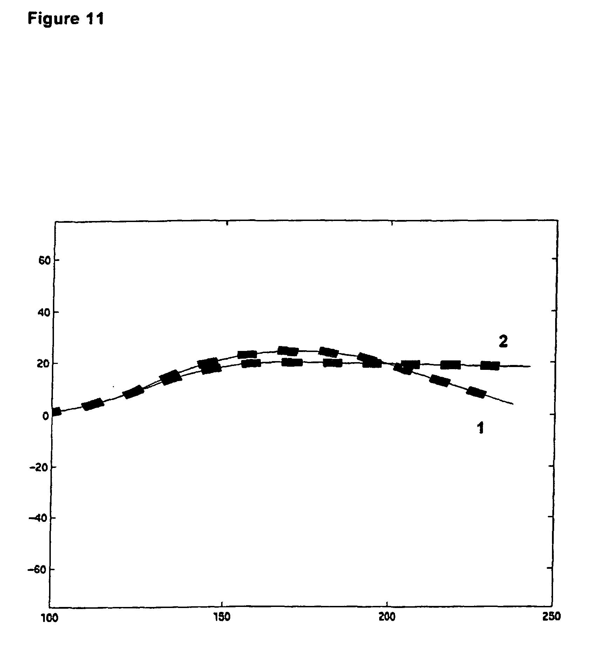

L'embardée observée sur le véhicule sans contrôle (Figure 11, repère 1) est limitée en présence du contrôle d'anti-roulis (Figure 11, repère 2), ce qui s'illustre par une attitude du véhicule parallèle à la trajectoire du centre de gravité en trait continu.

**Revendications**

1. Méthode de contrôle de la stabilité d'un véhicule, ledit véhicule comportant une caisse et au moins une liaison au sol avant et une liaison au sol arrière, chaque liaison au sol comprenant chacune une roue, chaque roue comportant un bandage pneumatique ou non pneumatique en contact avec le sol, le véhicule ayant un temps caractéristique fonction de son inertie correspondant au déphasage temporel dans l'apparition des poussées aux roues à l'avant et à l'arrière, à partir d'une commande du conducteur du véhicule, le véhicule étant pourvu d'actionneurs pour agir sur les forces transmises au sol par chacune des roues, la méthode comprend les étapes suivantes :

   (a) relever en temps réel la valeur réelle d'une variable choisie dans le groupe constitué par la poussée transversale « Y » et la charge verticale « Z », toutes deux agissant au centre de chacune des roues avant et arrière ;
   (b) calculer en temps réel la valeur souhaitée d'au moins un paramètre de référence qui peut être corrélé auxdites valeurs réelles d'une variable choisie, résultant d'une action du conducteur sur les actionneurs, en tenant compte du temps caractéristique ;
   (c) comparer la valeur souhaitée à la valeur réelle pour déterminer si la valeur réelle est compatible avec la valeur souhaitée ; et
   (d) si la comparaison de l'étape (c) indique que la valeur réelle n'est pas compatible avec la valeur souhaitée, agir sur les actionneurs pour ramener la valeur réelle substantiellement compatible avec la valeur souhaitée.

2. Méthode selon la revendication 1, dans laquelle ladite variable est la poussée transversale « Y », et ladite valeur souhaitée d'au moins un paramètre de référence est la poussée transversale souhaitée « $Y_{souhaitée}$ », au centre de chaque roue.

3. Méthode selon la revendication 2, dans laquelle l'étape (c) comporte obtenir un signal d'erreur représentatif de l'écart en amplitude et en signe entre la poussée transversale réelle « Y », et la poussée transversale souhaitée « $Y_{souhaitée}$ » et piloter les actionneurs pour minimiser le signal d'erreur.

4. Méthode selon la revendication 1, dans laquelle ladite variable est la poussée transversale « Y », les actionneurs comportent une commande de direction, et l'étape (a) comprend calculer en temps réel le couple réel de lacet correspondant aux valeurs réelles de poussée transversale « Y » au centre de chaque roue, et la valeur souhaitée d'au moins un paramètre de référence de l'étape (b) étant le couple de lacet « $M_{souhaité}$ » souhaité, la méthode comprenant mesurer en temps réel un signal à la commande de direction et calculer le couple de lacet « $M_{souhaité}$ » souhaité, et l'étape (c) comprend utiliser ledit couple de lacet « $M_{souhaité}$ » souhaité pour le comparer au couple réel de lacet de l'étape (a).

5. Méthode selon la revendication 2, dans laquelle l'étape (c) comporte obtenir un signal d'erreur représentatif de l'écart en amplitude et en signe entre le couple de lacet « $M_{souhaité}$ » souhaité et le couple réel de lacet et l'étape (d) comprend piloter les actionneurs pour minimiser le signal d'erreur.

6. Méthode selon la revendication 1, dans laquelle ladite variable est la charge verticale « Z ».

**7.** Méthode selon la revendication 6 dans laquelle les actionneurs comportent une commande de direction, et la valeur souhaitée d'au moins un paramètre de référence de l'étape (b) étant la charge « $Z_{souhaitée}$ » au centre de chaque roue, la méthode comprenant mesurer en temps réel un signal à la commande de direction et calculer les charges « $Z_{souhaitées}$ ».

**8.** Méthode selon la revendication 7, dans laquelle l'étape (c) comporte obtenir un signal d'erreur représentatif de l'écart en amplitude et en signe entre la charge verticale réelle « Z » et la charge « $Z_{souhaitée}$ » et l'étape (d) comprend piloter les actionneurs pour minimiser le signal d'erreur.

**9.** Méthode de contrôle de la stabilité d'un véhicule selon l'une des revendications 1 à 8, ledit véhicule étant tel que chaque liaison au sol comporte un dispositif de suspension verticale autorisant le débattement de ladite roue par rapport à ladite caisse, des premiers moyens de contrôle du roulis agissant entre les roues de l'essieu avant, des deuxièmes moyens de contrôle du roulis agissant entre les roues de l'essieu arrière, dans laquelle l'étape consistant à agir sur les actionneurs comporte une modification dynamique de la répartition entre l'essieu avant et l'essieu arrière du roulis à effort global d'anti-roulis constant, la part d'antiroulis arrière étant diminuée pour diminuer le couple de lacet imposé par les roues au véhicule et inversement, de façon à amoindrir le signal d'erreur.

**10.** Méthode de contrôle de la stabilité d'un véhicule selon l'une des revendications 1 à 9, ledit véhicule étant tel qu'au moins un essieu comporte un moyen de braquage complémentaire des roues d'au moins un essieu, ledit moyen agissant indépendamment du dispositif de commande du braquage, dans laquelle l'étape consistant à agir sur les actionneurs comporte une commande dynamique dudit moyen de braquage complémentaire visant à modifier le couple de lacet imposé au véhicule par les roues, pour amoindrir le signal d'erreur.

**11.** Méthode de contrôle de la stabilité d'un véhicule selon l'une des revendications 1 à 10, ledit véhicule comportant des moyens pour appliquer un couple freineur sélectivement à chacune des roues, dans laquelle l'étape consistant à agir sur les actionneurs consiste à freiner au moins une des roues à l'extérieur du virage négocié par le véhicule pour diminuer le couple de lacet imposé par les roues au véhicule ou à freiner au moins une des roues à l'intérieur du virage négocié par le véhicule pour augmenter le couple de lacet imposé par les roues au véhicule, de façon à amoindrir le signal d'erreur.

**12.** Système de contrôle de la stabilité d'un véhicule, ledit véhicule comportant une caisse et au moins une liaison au sol avant et une liaison au sol arrière, chaque liaison au sol comprenant chacune une roue, chaque roue comportant un bandage pneumatique ou non pneumatique en contact avec le sol, le véhicule ayant un temps caractéristique, fonction de son inertie, correspondant au déphasage temporel dans l'apparition des poussées aux roues à l'avant et à l'arrière, à partir d'une commande du conducteur du véhicule, le véhicule étant pourvu d'actionneurs pour agir sur les forces transmises au sol par chacune des roues, le système comprenant :

(a) des moyens pour relever en temps réel la valeur réelle d'une variable choisie dans le groupe constitué par la poussée transversale « Y » et la charge verticale « Z », toutes deux agissant au centre de chacune des roues avant et arrière ;
(b) un contrôleur permettant de, à partir des commandes du conducteur du véhicule et en en tenant compte du temps caractéristique, calculer en temps réel la valeur souhaitée d'au moins un paramètre de référence qui peut être corrélé auxdites valeurs d'une variable choisie, ledit contrôleur permettant de faire des comparaisons entre la valeur souhaitée et la valeur réelle pour obtenir un signal d'erreur ; et
(c) des moyens pour agir sur les actionneurs pour minimiser le signal d'erreur.

**13.** Système de contrôle de la stabilité d'un véhicule selon la revendication 12 dans lequel ladite variable est la poussée transversale « Y », et ladite valeur souhaitée d'au moins un paramètre de référence est la poussée transversale souhaitée « $Y_{souhaitée}$ », au centre de chaque roue.

**14.** Système de contrôle de la stabilité d'un véhicule selon la revendication 12 dans lequel ladite variable est la poussée transversale « Y » et le paramètre de référence est le couple de lacet « $M_{souhaité}$ » souhaité, les actionneurs comportant une commande de direction, le système comprenant :

- des moyens pour mesurer en temps réel un signal à la commande de direction ;
- ledit contrôleur est tel qu'il permet de calculer en temps réel le couple de lacet réel à partir des valeurs de la poussée transversale « Y » réelle, et de calculer le couple de lacet « $M_{souhaité}$ » souhaité tenant compte du signal à la commande de direction, le contrôleur permettant de comparer le couple réel de lacet et couple de lacet « $M_{souhaité}$ » souhaité pour obtenir un signal d'erreur.

**15.** Système de contrôle de la stabilité d'un véhicule selon la revendication 12 dans lequel ladite variable choisie est la charge verticale « Z » et le paramètre de référence est la charge verticale souhaitée « $Z_{souhaitée}$ ».

**16.** Système de contrôle de la stabilité d'un véhicule selon la revendication 15 dans lequel les actionneurs comportant une commande de direction, le système comprenant :

- des moyens pour mesurer en temps réel un signal à la commande de direction ;
- ledit contrôleur est tel qu'il permet de calculer en temps réel les charges verticales réelles « Z », et de calculer les charges verticales souhaitées « $Z_{souhaitées}$ » tenant compte du signal à la commande de direction, le contrôleur permettant de comparer les charges verticales réelles et souhaitées pour obtenir un signal d'erreur.

**17.** Système de contrôle de la stabilité d'un véhicule selon l'une des revendications 12 à 16, ledit véhicule étant tel que chaque liaison au sol comporte un dispositif de suspension verticale autorisant le débattement de ladite roue par rapport à ladite caisse, des premiers moyens de contrôle du roulis agissant entreiles roues de l'essieu avant, des deuxièmes moyens de contrôle du roulis agissant entre les roues de l'essieu arrière, dans lequel les moyens pour agir sur les actionneurs permettent d'effectuer une modification dynamique de la répartition entre l'essieu avant et l'essieu arrière du roulis à effort global d'anti-roulis constant, la part d'antiroulis arrière étant diminuée pour diminuer le couple de lacet imposé par les roues au véhicule et inversement, de façon à amoindrir le signal d'erreur.

**18.** Système de contrôle de la stabilité d'un véhicule selon l'une des revendications 12 à 17, ledit véhicule étant tel qu'au moins un essieu comporte un moyen de braquage complémentaire des roues d'au moins un essieu, ledit moyen agissant indépendamment du dispositif de commande du braquage, dans lequel les moyens pour agir sur les actionneurs comportent une commande dynamique dudit moyen de braquage complémentaire visant à modifier le couple de lacet imposé au véhicule par les roues, pour amoindrir le signal d'erreur.

**19.** Système de contrôle de la stabilité d'un véhicule selon l'une des revendications 12 à 18, ledit véhicule comportant des moyens pour appliquer un couple freineur sélectivement à chacune des roues, dans lequel les moyens pour agir sur les actionneurs comportent des moyens pour commander sélectivement le freinage d'au moins une des roues à l'extérieur du virage négocié par le véhicule pour diminuer le couple de lacet imposé par les roues au véhicule ou au moins une des roues à l'intérieur du virage négocié par le véhicule pour augmenter le couple de lacet imposé par les roues au véhicule, de façon à amoindrir le signal d'erreur.

**Claims**

**1.** A method for controlling the stability of a vehicle, said vehicle comprising a body and at least one front ground contacting arrangement and at least one rear ground contacting arrangement, each ground contacting arrangement comprising in each case one wheel, each wheel comprising a pneumatic or non-pneumatic tyre in contact with the ground, the vehicle having a characteristic time that is a function of its inertia and corresponds to the time phase shift in the manifestation of the thrusts on the wheels in the front and in the rear, following a command from the driver of the vehicle, the vehicle being provided with operating means to act on the forces transmitted to the ground by each of the wheels, the method comprising the following steps:

(a) measuring in real time the actual value of a variable selected from the group consisting of the transverse thrust "Y" and the vertical load "Z", both acting at the centre of each of the front and rear wheels;
(b) calculating in real time the desired value of at least one reference parameter which can be correlated to said actual values of a selected variable, as a result of an action of the driver on the operating means and taking into account the characteristic time;
(c) comparing the desired value to the actual value to determine whether the actual value is compatible with the desired value; and
(d) if the comparison of step (c) indicates that the actual value is not compatible with the desired value, acting on the operating means to bring the actual value into substantial compatibility with the desired value.

**2.** A method according to claim 1, wherein said variable is the transverse thrust "Y" and said desired value of at least one reference parameter is the desired transverse thrust "$Y_{desired}$" at the centre of each wheel.

3. A method according to claim 2, wherein step (c) comprises generating an error signal representative of the magnitude and direction of the difference between the actual transverse thrust "Y" and the desired transverse thrust "$Y_{desired}$", and controlling the operating means to minimise the error signal.

4. A method according to claim 1, wherein said variable is the transverse thrust "Y", the operating means comprise a command for controlling the steering, and wherein step (a) comprises calculating in real time the actual yaw moment corresponding to the actual values of transverse thrust "Y" at the centre of each wheel, and the desired value of at least one reference parameter of step (b) being the desired yaw moment "$M_{desired}$", the method comprising measuring in real time a signal at the steering command and calculating the desired yaw moment "$M_{desired}$", and step (c) comprises utilising said desired yaw moment "$M_{desired}$" for comparison with the actual yaw moment of step (a).

5. A method according to claim 2, wherein step (c) comprises generating an error signal representative of the magnitude and the direction of the difference between the desired yaw moment "$M_{desired}$" and the actual yaw moment, and step (d) comprises controlling the operating means to minimise the error signal.

6. A method according to claim 1, wherein said variable is the vertical load "Z".

7. A method according to claim 6, wherein the operating means comprise a command for controlling the steering, and the desired value of at least one reference parameter of step (b) being the load "$Z_{desired}$" at the centre of each wheel, the method comprising measuring in real time a signal at the steering command and calculating the loads "$Z_{desired}$".

8. A method according to claim 7, wherein step (c) comprises generating an error signal representative of the magnitude and the direction of the difference between the actual vertical load "Z" and the load "$Z_{desired}$", and step (d) comprises controlling the operating means to minimise the error signal.

9. A method for controlling the stability of a vehicle according to one of claims 1 to 8, said vehicle being such that each ground contacting arrangement comprises a vertical suspension device allowing clearance of said wheel with respect to said body, first roll control means acting between the wheels of the front axle, second roll control means acting between the wheels of the rear axle, in which the step consisting of acting on the operating means comprises a dynamic modification of the distribution of the roll between the front axle and rear axle so as to maintain a constant overall anti-roll force, the contribution of the rear anti-roll device being reduced in order to decrease the yaw moment exerted by the wheels on the vehicle, and vice versa, in such a way as to reduce the error signal.

10. A method for controlling the stability of a vehicle according to one of claims 1 to 9, said vehicle being such that at least one axle comprises a supplementary means for steering the wheels of at least one axle, said means acting independently of the steering control device, in which the step consisting of acting on the operating means comprises a dynamic control of said supplementary steering means intended to modify the yaw moment exerted on the vehicle by the wheels, in order to reduce the error signal.

11. A method for controlling the stability of a vehicle according to one of claims 1 to 10, said vehicle comprising means for applying a braking torque selectively to each of the wheels, in which the step consisting of acting on the operating means consists of exerting a braking action on at least one of the wheels on the outside of the bend negotiated by the vehicle in order to reduce the yaw moment exerted by the wheels on the vehicle, or exerting a braking action on at least one of the wheels on the inside of the bend negotiated by the vehicle in order to increase the yaw moment exerted by the wheels on the vehicle, in such a way as to reduce the error signal.

12. A vehicle stability control system, said vehicle comprising a body and at least one front ground contacting arrangement and at least one rear ground contacting arrangement, each ground contacting arrangement comprising in each case one wheel, each wheel comprising a pneumatic or non-pneumatic tyre in contact with the ground, the vehicle having a characteristic time that is a function of its inertia and corresponds to the time phase shift in the manifestation of the transverse thrusts on the wheels in the front and in the rear, following a command from the driver of the vehicle, the vehicle being provided with operating means to act on the forces transmitted to the ground by each of the wheels, the system comprising:

(a) means for measuring in real time the actual value of a variable selected from the group consisting of the transverse thrust "Y" and the vertical load "Z", both acting at the centre of each of the front and rear wheels;

(b) a controller allowing, as a result of actions of the driver of the vehicle and taking into account the characteristic time, calculation in real time of the desired value of at least one reference parameter which can be correlated to said actual values of a selected variable, said controller allowing the performance of comparisons between the desired value and the actual value in order to obtain an error signal; and

(c) means for acting on the operating means so as to minimise the error signal.

13. A vehicle stability control system according to claim 12, in which said variable is the transverse thrust "Y" and said desired value of at least one reference parameter is the desired transverse thrust "$Y_{desired}$" at the centre of each wheel.

14. A vehicle stability control system according to claim 12, in which said variable is the transverse thrust "Y" and the reference parameter is the desired yaw moment "$M_{desired}$", the operating means comprising a command for operating the steering, the system comprising:

- means for measuring in real time a signal in the steering command;
- said controller is such that it allows calculation in real time of the actual yaw moment from the values of actual transverse thrust "Y" and calculation of the desired yaw moment "$M_{desired}$" taking account of the signal in the steering command, the controller allowing comparison of the actual yaw moment and desired yaw moment "$M_{desired}$" in order to obtain an error signal.

15. A vehicle stability control system according to claim 12, in which said selected variable is the vertical load "Z" and the reference parameter is the desired vertical load "$Z_{desired}$".

16. A vehicle stability control system according to claim 15, in which the operating means comprise a command for operating the steering, the system comprising:

- means for measuring in real time a signal in the steering command;
- said controller is such that it allows calculation in real time of the actual vertical loads "Z" and calculation of the desired vertical loads "$Z_{desired}$" taking into account the signal in the steering command, the controller allowing comparison of the actual and desired vertical loads in order to obtain an error signal.

17. A vehicle stability control system according to one of claims 12 to 16, said vehicle being such that each ground contacting arrangement comprises a vertical suspension device allowing clearance of said wheel with respect to said body, first roll control means acting between the wheels of the front axle, second roll control means acting between the wheels of the rear axle, in which the means for acting on the operating means allow a dynamic modification of the distribution of the roll between the front axle and rear axle to be made so as to maintain a constant overall anti-roll force, the contribution of the rear anti-roll device being reduced in order to decrease the yaw moment exerted by the wheels on the vehicle, and vice versa, in such a way as to reduce the error signal.

18. A vehicle stability control system according to one of claims 12 to 17, said vehicle being such that at least one axle comprises a supplementary means for steering the wheels of at least one axle, said means acting independently of the steering control device, in which the means for acting on the operating means comprise a dynamic control of said supplementary steering means intended to modify the yaw moment exerted on the vehicle by the wheels, in order to reduce the error signal.

19. A vehicle stability control system according to one of claims 12 to 18, said vehicle comprising means for applying a braking torque selectively to each of the wheels, in which the means for acting on the operating means comprise means for selectively exerting a braking action on at least one of the wheels on the outside of the bend negotiated by the vehicle in order to reduce the yaw moment exerted by the wheels on the vehicle, or at least one of the wheels on the inside of the bend negotiated by the vehicle in order to increase the yaw moment exerted by the wheels on the vehicle, in such a way as to reduce the error signal.

**Patentansprüche**

1. Verfahren zur Steuerung der Stabilität eines Fahrzeugs, wobei das Fahrzeug eine Karosserie und wenigstens eine vordere Bodenverbindung und eine hintere Bodenverbindung umfasst, wobei jede Bodenverbindung jeweils ein Rad umfasst, wobei jedes Rad eine Bereifung mit oder ohne Luft in Kontakt mit dem Boden umfasst, wobei das Fahrzeug eine Zeitkonstante aufweist, die von seiner Trägheit abhängt und einer zeitlichen Phasenverschiebung beim Auftreten von Führungskräften an den Vorder- und Hinterrädern entspricht, die auf eine Vorgabe des Fahrzeugführers zurückgehen, wobei das Fahrzeug mit Stellgliedern versehen ist, um die Kräfte zu beeinflussen, die durch jedes der Räder auf den Boden ausgeübt werden, wobei das Verfahren die folgenden Schritte umfasst:

(a) Ermitteln in Echtzeit des realen Wertes einer gewählten Variable aus der Gruppe der seitlichen Führungskraft "Y" und der vertikalen Last "Z", wobei beide auf die Mitte jedes Rades vorne und hinten wirken,

(b) Berechnen in Echtzeit des gewünschten Wertes wenigstens eines Referenzparameters, der mit den realen Werten einer gewählten Variablen korreliert ist, was zu einem Einwirken des Fahrzeugführers auf die Stellglieder führt, wobei die Zeitkonstante berücksichtigt wird,

(c) Vergleichen des gewünschten Wertes mit dem realen Wert, um zu bestimmen, ob der reale Wert mit dem gewünschten Wert vergleichbar ist, und

(d) wenn der Vergleich im Schritt (c) anzeigt, dass der reale Wert nicht mit dem gewünschten Wert vergleichbar ist, Einwirken auf die Stellglieder, um den realen Wert im Wesentlichen mit dem gewünschten Wert vergleichbar zu machen.

2. Verfahren nach Anspruch 1, bei dem die Variable die seitliche Führungskraft "Y" ist und der gewünschte Wert wenigstens eines Referenzparameters die gewünschte seitliche Führungskraft "$Y_{gewünscht}$" in der Mitte jedes Rades ist.

3. Verfahren nach Anspruch 2, bei dem der Schritt (c) das Ermitteln eines Differenzsignals umfasst, das dem Unterschied zwischen der realen seitlichen Führungskraft "Y" und der gewünschten seitlichen Führungskraft "$Y_{gewünscht}$" in Bezug auf Amplitude und Richtung entspricht, und das Ansteuern der Stellglieder, um das Differenzsignal zu minimieren.

4. Verfahren nach Anspruch 1, bei dem die Variabel die seitliche Führungskraft "Y" ist, wobei die Stellglieder eine Richtungsvorgabe umfassen und der Schritt (a) das Berechnen in Echtzeit des realen Giermoments entsprechenden den realen Werten der seitlichen Führungskraft "Y" in der Mitte von jedem Rad umfasst und der gewünschte Wert von wenigstens einem Referenzparameter im Schritt (b) das Giermoment "$M_{gewünscht}$" ist, wobei das Verfahren das Messen in Echtzeit eines Signals für die Richtungsvorgabe und das Berechnen des gewünschten Giermoments "$M_{gewünscht}$" umfasst und in Schritt (c) das gewünschte Giermoments "$M_{gewünscht}$" verwendet wird, um es mit dem realen Giermoment aus Schritt (a) zu vergleichen.

5. Verfahren nach Anspruch 2, bei dem der Schritt (c) das Ermitteln eines Differenzsignals umfasst, das den Unterschied in Bezug auf Amplitude und Richtung zwischen dem gewünschten Giermoment "$M_{gewünscht}$" und dem realen Giermoment wiedergibt, und der Schritt (d) das Ansteuern der Stellglieder umfasst, um das Differenzsignal zu minimieren.

6. Verfahren nach Anspruch 1, bei dem die Variable die vertikale Last "Z" ist.

7. Verfahren nach Anspruch 6, bei dem die Stellglieder eine Richtungsvorgabe umfassen und der gewünschte Wert von wenigstens einem Referenzparameter von Schritt (b) die Last "$Z_{gewünscht}$" in der Mitte von jedem Rad ist, wobei das Verfahren das Messen in Echtzeit eines Signals für die Richtungsvorgabe und das Berechnen der Lasten "$Z_{gewünscht}$" umfasst.

8. Verfahren nach Anspruch 7, bei dem der Schritt (c) das Ermitteln eines Differenzsignals umfasst, das den Unterschied zwischen der realen vertikalen Last "Z" und der Last "$Z_{gewünscht}$" in Bezug auf Amplitude und Richtung wiedergibt, und der Schritt (d) das Ansteuern der Stellglieder umfasst, um das Differenzsignal zu minimieren.

9. Verfahren zur Steuerung der Stabilität eines Fahrzeugs nach einem der Ansprüche 1 bis 8, wobei bei dem Fahrzeug jede Bodenverbindung eine vertikale Aufhängungsvorrichtung zur Ausfederung des Rades in Bezug auf die Karosserie, erste Mittel zur Schlingerstabilisierung, die zwischen den Rädern der Vorderachse wirken, und zweite Mittel zur Schlingerstabilisierung, die zwischen den Rädern der Hinterachse wirken, umfasst, wobei der Schritt der Einwirkung auf die Betriebsmittel beim Schlingern eine dynamische Modifizierung der Verteilung zwischen der Vorderachse und der Hinterachse zur Aufrechterhaltung einer Gesamtstabilisierung gegenüber Schlingern umfasst, wobei der hintere Stabilisierungsteil verringert wird, um das Giermoment zu verringern, das über die Räder auf das Fahrzeug wirkt, und umgekehrt, um so das Differenzsignal zu verkleinern.

**10.** Verfahren zur Steuerung der Stabilität eines Fahrzeugs nach einem der Ansprüche 1 bis 9, wobei bei dem Fahrzeug wenigstens eine Achse eine zusätzliche Lenkeinrichtung für die Räder wenigstens einer Achse umfasst, wobei diese Einrichtung unabhängig von der Vorgabevorrichtung für das Lenken ist, wobei der Schritt des Einwirkens auf die Stellglieder eine dynamische Vorgabe für die zusätzliche Lenkeinrichtung umfasst, um das Giermoment zu modifizieren, das über die Räder auf das Fahrzeug wirkt, um das Differenzsignal zu verkleinern.

**11.** Verfahren zur Steuerung der Stabilität eines Fahrzeugs nach einem der Ansprüche 1 bis 10, wobei das Fahrzeug Einrichtungen umfasst, um selektiv auf jedes der Räder ein Bremsmoment auszüuben, bei dem der Schritt des Einwirkens auf die Stellglieder darin besteht, wenigstens eines der Räder außerhalb der Kurvenbewegung des Fahrzeugs zu bremsen, um das Giermoment zu verringern, das über die Räder auf das Fahrzeug wirkt, oder um wenigstens eines der Räder innerhalb der Kurvenbewegung des Fahrzeugs zu bremsen, um das Giermoment zu verstärken, das über die Räder auf das Fahrzeug wirkt, um das Differenzsignal zu verkleinern.

**12.** System zur Steuerung der Stabilität eines Fahrzeugs, wobei das Fahrzeug eine Karosserie und wenigstens eine vordere Bodenverbindung und eine hintere Bodenverbindung umfasst, wobei jede Bodenverbindung jeweils ein Rad umfasst, wobei jedes Rad eine Bereifung mit oder ohne Luft in Kontakt mit dem Boden umfasst, wobei das Fahrzeug eine Zeitkonstante aufweist, die von seiner Trägheit abhängt und einer zeitlichen Phasenverschiebung beim Auftreten von Führungskräften an den Vorder- und Hinterrädern entspricht, die auf eine Vorgabe des Fahrzeugführers zurückgehen, wobei das Fahrzeug mit Stellgliedern versehen ist, um die Kräfte zu beeinflussen, die durch jedes der Räder auf den Boden ausgeübt werden, wobei das System umfasst:

(a) Einrichtungen zum Ermitteln in Echtzeit des realen Wertes einer gewählten Variable aus der Gruppe der seitlichen Führungskraft "Y" und der vertikalen Last "Z", wobei beide auf die Mitte jedes Rades vorne und hinten wirken,

(b) eine Steuerung, um in Echtzeit den gewünschten Wert wenigstens eines Referenzparameters in Abhängigkeit von Vorgaben des Fahrzeugführers und unter Berücksichtigung der Zeitkonstante zu berechnen, der mit den realen Werten einer gewählten Variablen korreliert ist, wobei es durch die Steuerung möglich wird, Vergleiche zwischen dem gewünschten Wert und dem realen Wert durchzuführen, um ein Differenzsignal zu ermitteln, und

(c) Einrichtungen zum Einwirken auf die Stellglieder, um das Differenzsignal zu minimieren.

**13.** System nach Anspruch 12, bei dem die Variable die seitliche Führungskraft "Y" ist und der gewünschte Wert wenigstens eines Referenzparameters die gewünschte seitliche Führungskraft "$Y_{gewünscht}$" in der Mitte jedes Rades ist.

**14.** System zur Steuerung der Stabilität eines Fahrzeugs nach Anspruch 12, bei dem die Variable die seitliche Führungskraft "Y" ist und der Referenzparameter das gewünschte Giermoment "$M_{gewünscht}$" ist, wobei die Stellglieder eine Richtungsvorgabe umfassen, wobei das System umfasst:

Einrichtungen zum Messen in Echtzeit eines Signals für die Richtungsvorgabe,

wobei es die Steuerung ermöglicht, in Echtzeit das reale Giermoment aus den Werten der realen seitlichen Führungskraft "Y" zu berechnen und das gewünschte Giermoment "$M_{gewünscht}$" unter Berücksichtigung des Signals für die Richtungsvorgabe zu berechnen, wobei es die Steuerung ermöglicht, das reale Giermoment und das gewünschte Giermoment "$M_{gewünscht}$" zu vergleichen, um ein Differenzsignal zu erhalten.

**15.** System nach Anspruch 12, bei dem die gewählte Variable die vertikale Last "Z" ist und der Referenzparameter die gewünschte vertikale Last "$Z_{gewünscht}$" ist.

**16.** System zur Steuerung der Stabilität eines Fahrzeugs nach Anspruch 15, bei dem die Stellglieder eine Richtungsvorgabe umfassen und das System umfasst:

Einrichtungen zum Messen in Echtzeit eines Signals für die Richtungsvorgabe,

wobei es die Steuerung ermöglicht, in Echtzeit die realen Lasten "Z" zu berechnen und die gewünschten vertikalen Lasten "$Z_{gewünscht}$" unter Berücksichtigung des Signals für die Richtungsvorgabe zu berechnen, wobei es die Steuerung ermöglicht, die realen und die gewünschten vertikalen Lasten zu vergleichen, um ein Differenzsignal zu erhalten.

**17.** System zur Steuerung der Stabilität eines Fahrzeugs nach einem der Ansprüche 12 bis 16, wobei bei dem Fahrzeug jede Bodenverbindung eine vertikale Aufhängungsvorrichtung zur Ausfederung des Rades in Bezug auf die Karosserie, erste Mittel zur Schlingerstabilisierung, die zwischen den Rädern der Vorderachse wirken, und zweite Mittel zur Schlingerstabilisierung, die zwischen den Rädern der Hinterachse wirken, umfasst, wobei die Einrichtungen zum Einwirken auf die Betriebsmittel beim Schlingern eine dynamische Modifizierung der Verteilung zwischen der Vorderachse und der Hinterachse zur Aufrechterhaltung einer Gesamtstabilisierung gegenüber Schlingern umfassen, wobei der hintere Stabilisierungsteil verringert wird, um das Giermoment zu verringern, das über die Räder auf das Fahrzeug wirkt, und umgekehrt, um so das Differenzsignal zu verkleinern.

**18.** System zur Steuerung der Stabilität eines Fahrzeugs nach einem der Ansprüche 12 bis 17, wobei bei dem Fahrzeug wenigstens eine Achse eine zusätzliche Lenkeinrichtung für die Räder wenigstens einer Achse umfasst, wobei diese Einrichtung unabhängig von der Vorgabevorrichtung für das Lenken ist,
wobei die Einrichtungen für das Einwirken auf die Stellglieder eine dynamische Vorgabe für die zusätzliche Lenkeinrichtung umfassen, um das Giermoment zu modifizieren, das über die Räder auf das Fahrzeug wirkt, um das Differenzsignal zu verkleinern.

**19.** System zur Steuerung der Stabilität eines Fahrzeugs nach einem der Ansprüche 12 bis 18, wobei das Fahrzeug Einrichtungen umfasst, um selektiv auf jedes der Räder ein Bremsmoment auszuüben, bei dem die Einrichtungen für das Einwirken auf die Stellglieder Einrichtungen umfassen, um selektiv wenigstens eines der Räder außerhalb der Kurvenbewegung des Fahrzeugs zu bremsen, um das Giermoment zu verringern, das über die Räder auf das Fahrzeug wirkt, oder um wenigstens eines der Räder innerhalb der Kurvenbewegung des Fahrzeugs zu bremsen, um das Giermoment zu verstärken, das über die Räder auf das Fahrzeug wirkt, um das Differenzsignal zu verkleinern.

Fig 1

| | | Angle volant à l'instant t –retard T | Vitesse d'angle volant à l'instant t – retard T |

Vitesse instantanée du véhicule

Angle volant à l'instant t

Vitesse d'angle volant à l'instant t

Poussées ou charges souhaitées par le conducteur sur chaque pneu à l'instant t

Couple de lacet souhaité par le conducteur sur le véhicule :

Comparateur

Mesure des poussées, des charges réelles à l'instant t:

Contrôleur

Actionneurs

Véhicule

Fig 1A

**Fig. 2**

**Figure 3a**

Yp 1

Yp 2

Zp 1    Zp 2

Zp 3    Zp 4

Yp 3

Yp 4

**Figure 3b**

R

CG

Ms

h

h 2

h 1

**Figure 3c**

K2 , K1

v2 , v1

**Figure 4**

$$D_1(Zp_1) = D_{1,0} + A_1(Zp_1 - \frac{M_{Av}g}{2})$$

**Figure 5-a**

Poussee Essieu avant Yav

Poussee Essieu arriere Yarr

Couple de Lacet Mz

**Figure 5-b**

Charge Zp1 pneu avant gauche

Charge Zp2 pneu avant droit

Charge Zp3 pneu arriere gauche

Charge Zp4 pneu arriere droit

**Figure 5-c**

Poussee Yp1 pneu avant gauche

Poussee Yp2 pneu avant droit

Poussee Yp3 pneu arriere gauche

Poussee Yp4 pneu arriere droit

**Figure 6-a**

Poussee Essieu avant Yav

Poussee Essieu arriere Yarr

Couple de Lacet Mz

**Figure 6-b**

Charge Zp1 pneu avant gauche

Charge Zp2 pneu avant droit

Charge Zp3 pneu arriere gauche

Charge Zp4 pneu arriere droit

## Figure 6-c

### Poussee Yp1 pneu avant gauche

### Poussee Yp2 pneu avant droit

### Poussee Yp3 pneu arriere gauche

### Poussee Yp4 pneu arriere droit

**Figure 7**

**Figure 8**

Repartition Av/Arr d anti-roulis

**Figure 9-a**

Poussee Essieu avant Yav

Poussee Essieu arriere Yarr

Couple de Lacet Mz

**Figure 9-b**

Charge Zp1 pneu avant gauche

Charge Zp2 pneu avant droit

Charge Zp3 pneu arriere gauche

Charge Zp4 pneu arriere droit

**Figure 9-c**

Poussee Yp1 pneu avant gauche

Poussee Yp2 pneu avant droit

Poussee Yp3 pneu arriere gauche

Poussee Yp4 pneu arriere droit

**Figure 10-a**

**Figure 10-b**

Charge Zp1 pneu avant gauche

Charge Zp2 pneu avant droit

Charge Zp3 pneu arriere gauche

Charge Zp4 pneu arriere droit

**Figure 10-b**

Poussee Yp1 pneu avant gauche

Poussee Yp2 pneu avant droit

Poussee Yp3 pneu arriere gauche

Poussee Yp4 pneu arriere droit

**Figure 11**

**Figure 12**

**Repartition Av / Arr d'anti-roulis**

Temps (en s)